# EUROPÄISCHE PATENTSCHRIFT

(11) **EP 3 995 716 B1**
(45) Veröffentlichungstag und Bekanntmachung des Hinweises auf die Patenterteilung: **04.03.2026**
(21) Anmeldenummer: 21205205.4
(22) Anmeldetag: 28.10.2021
(51) Int. Cl.: F16F 1/373

(54) **DÄMPFUNGSANORDNUNG, BAUTEIL MIT DÄMPFUNGSANORDNUNG SOWIE ENTSPRECHENDE BAUTEILVERBINDUNG, EIN HERSTELLUNGSVERFAHREN UND EIN VERBINDUNGSVERFAHREN**
DAMPING ARRANGEMENT, COMPONENT WITH DAMPING ARRANGEMENT AND CORRESPONDING COMPONENT CONNECTION, MANUFACTURING METHOD AND CONNECTION METHOD
DISPOSITIF D'AMORTISSEMENT, COMPOSANT POURVU DE DISPOSITIF D'AMORTISSEMENT, AINSI QUE LIAISON DES COMPOSANTS CORRESPONDANTE, PROCÉDÉ DE FABRICATION ET PROCÉDÉ DE LIAISON

(30) Priorität: 29.10.2020 DE 102020128549
(43) Veröffentlichungstag der Anmeldung: 11.05.2022
(73) Patentinhaber: Böllhoff Verbindungstechnik GmbH, 33649 Bielefeld (DE)
(72) Erfinder: STEFFENFAUSEWEH, Sandra, 33415 Verl (DE); VORDERWISCH, Alexander, 33613 Bielefeld (DE)
(74) Vertreter: HWP Intellectual Property

(56) Entgegenhaltungen:
- EP-A2- 1 054 386
- DE-A1- 102005 010 433
- DE-A1- 102019 104 386
- DE-A1- 102019 107 885
- US-A- 5 842 677
- US-B1- 9 771 030
- US-B2- 7 185 873

## Beschreibung

### 1. Gebiet der Erfindung

Die vorliegende Erfindung betrifft eine Dämpfungsanordnung bestehend aus zwei, insbesondere baugleichen, Dämpfungselementen mit jeweils einer zentralen ersten Durchgangsöffnung und nur einer Hülse, ein erstes Bauteil mit einer Dämpfungsanordnung, eine Bauteilverbindung mittels einer Dämpfungsanordnung, ein Herstellungsverfahren einer Dämpfungsanordnung sowie ein Verbindungsverfahren mittels einer Dämpfungsanordnung.

### 2. Hintergrund der Erfindung

Befestigungsanordnungen mit Dämpfungselementen zur Befestigung von zwei Bauteilen aneinander, die aufgrund der Dämpfungselemente eine Dämpfungswirkung aufweisen, sind im Stand der Technik allgemein bekannt. Solche Befestigungsanordnungen werden allgemein in einer Bauteilöffnung eines ersten Bauteils angeordnet und auf beiden Seiten der Bauteilöffnung gesichert. Eine durch die Befestigungsanordnung gesteckte Verbindungsschraube dient zur Befestigung des ersten Bauteils an einem zweiten Bauteil.

Zur Befestigung der Befestigungsanordnung in der Bauteilöffnung des ersten Bauteils werden herkömmlicherweise zwei unterschiedlich ausgebildete Befestigungsvorrichtungen verwendet von denen jede auf einer Bauteilseite angeordnet ist. Daher umfasst die Befestigungsanordnung entsprechend zusammenwirkende Sicherungselemente, Dämpfungselemente, Hülsen und dergleichen auf jeder Bauteilseite.

Eine Montagevorrichtung zum physischen Verbinden einer Vorrichtung oder eines elektrischen Paneels mit einer Montagestruktur ist beispielsweise in US 2012/0049425 A1 beschrieben. Die Montagevorrichtung bietet eine Stoß- und Kraftisolation. Die Montagevorrichtung umfasst einen inneren und einen äußeren Abschnitt, die mechanisch über flexible stoßabsorbierende Strukturen verbunden sind. Der äußere Teil der Montagevorrichtung ist über entfernbare Verbindungsmittel mechanisch mit einer Befestigungsstruktur verbunden. Eine Vorrichtung oder eine elektrische Platte ist über Befestigungsmittel an dem Mittelabschnitt der Montagevorrichtung befestigt.

US 2017/0207615 A1 betrifft eine Kabelführungsanordnung, die zur Unterstützung von Medienkabeln konfiguriert ist. Die Kabelführungsanordnung umfasst Befestigungsmerkmale/- strukturen, die so konfiguriert und dimensioniert sind, dass sie in Bezug auf eine Stützstruktur lösbar montiert werden können.

Eine Befestigungsvorrichtung zur Befestigung einer Entkopplungsvorrichtung bezüglich eines Lochrands einer Lochausnehmung eines Abschirmteils ist in DE 10 2016 106 152 A1 beschrieben. Die Entkopplungsvorrichtung zur schwingungsentkoppelnden Verbindung einer Hülse mit dem Abschirmteil besitzt zumindest ein Überbrückungselement, welches an seinem radialen Außenrand Verbindungsmittel zum befestigenden Verbinden des Überbrückungselements mit dem Lochrand des Abschirmteils aufweist. Die Verbindungsmittel umfassen mindestens vier Laschen, die vom Überbrückungselement radial nach außen abgehen. Eine Teilmenge von mindestens zwei Laschen des Überbrückungselements ist zur Anlage an einer ersten Außenseite des Abschirmteils und eine verbleibende Restmenge von mindestens zwei Laschen ist zur Anlage an einer gegenüberliegenden zweiten Außenseite des Abschirmteils vorgesehen. Der Lochrand mit den Laschen der Teilmenge und den Laschen der Restmenge ist mit einem Klemmsitz bezüglich der Entkopplungsvorrichtung festlegbar.

DE 60 2004 002 062 T2 beschreibt ein vibrationsgeschütztes Hitzeschild, das so an einer Vibrationsquelle befestigt ist, dass es zumindest einen Teil einer Hitzequelle abdeckt. Zudem bildet es einen Spalt in Bezug auf eine Oberfläche der besagten Hitzequelle aus, um eine Hitzestrahlung von der Hitzequelle zu verringern. Das Hitzeschild umfasst einen vibrationsgeschützten Hitzeschild-Hauptkörper-Abschnitt, ein Kragen-Glied, eine Unterlegscheibe sowie ein Verbindungs-Glied.

Ein Kabelverbinder, der sowohl automatisch versiegelt als auch eine Zugentlastung bereitstellt, wenn ein Draht eingeführt wird, ist in US 2007/0026735 A1 beschrieben. Der Kabelverbinder umfasst einen Drahtdurchgang durch eine biegbare Hülle, die sowohl den durch den Durchgang eingeführten Draht als auch die Wandöffnung, in der der Stecker befestigt ist, abdichtet. Ein steiferes Skelett stützt diese Hülle und ist mit Anhängern versehen, die es ermöglichen, den Draht durch den Durchgang hindurchzuführen, die jedoch jegliches Entfernen des Drahtes vom Durchgang blockieren.

EP 2 105 617 A2 beschreibt eine zweiteilige Befestigungsanordnung für ein Flächenelement, die sich aus einem Basiselement und einem Kopplungselement zusammensetzt. Das Basiselement ist zweiseitig ausgebildet mit einer Befestigungsfläche an seiner ersten Seite und einem von seiner zweiten Seite vorstehenden Verbindungszapfen, mit dem eine Schnappverbindung zum Kopplungselement herstellbar ist. Das Kopplungselement ist ebenfalls zweiseitig ausgebildet mit einer Befestigungsfläche an seiner ersten Seite und einer Zapfenaufnahme für den Verbindungszapfen des Basiselements an seiner zweiten Seite, während das Kopplungselement eine Öffnung aufweist, in der die Zapfenaufnahme federnd angeordnet ist.

Eine Dichtungshülse aus Kunststoff zur Verwendung an Metallbolzen im Wandaufbau zum Schutz von Drähten, Kabeln, Leitungen und dergleichen ist in US 5,537,714 A beschrieben. Die Dichtungshülse umfasst einen zylindrischen Körper mit einem vergrößerten Flansch an einem Ende mit radial vorstehenden Federschnallen an der Außenseite des Körpers, wodurch die Dichtungshülse in ein Loch in der Größe des Stegs eingesetzt werden kann, wobei die Lochkante zwischen den Rastnasen und dem Flansch eingeschlossen ist. Auf der anderen Seite des Flansches befinden sich diametral gegenüberliegende axial vorstehende Federfinger. Der Flansch weist auch zwei diametral gegenüberliegende Löcher auf, wobei die Finger und Löcher so positioniert sind, dass zwei Dichtungshülsen durch axiales Drehen gegeneinander Flansch an Flansch miteinander verbunden werden können.

US 4,656,689 A betrifft ebenfalls eine Dichtungshülse, um eine Leitung zu schützen, die durch eine Wandöffnung hindurchgeht, und um eine Luftdichtung zwischen der Leitung und dem Rand der Wand um die Wandöffnung herum vorzusehen. Die Dichtungshülse hat einen relativ steifen Befestigungsabschnitt mit Vorsprüngen, die sich davon erstrecken, und Verriegelungsvorrichtungen an den Enden der Vorsprünge, um die Ränder der Wand um die Wandöffnung herum zu ergreifen. Ein elastomerer Dichtungsabschnitt nimmt die Vorsprünge auf und hat eine Öffnung mit kleineren Abmessungen als die Außenabmessungen der Leitung.

Ein Verfahren zum Ausbilden eines Durchgangslochs durch eine Verbundstruktur mit einer Vielzahl von inneren Kammern ist in US 8,409,395 B2 beschrieben. Ein Einfügungsring ist mit der Verbundstruktur verbunden, um eine Schutzschicht um den Umfang einer Durchdringung zu schaffen, die in der Verbundstruktur ausgebildet ist. Ein Klebstoff ist zwischen der Verbundstruktur und dem Einsatzring angeordnet, um eine fluiddichte Dichtung zwischen dem Einsatzring und den inneren Kammern zu schaffen.

Eine weitere Dämpfungsanordnung ist aus DE 10 2005 010 433 A1 bekannt, die ein Dämpfungslager zur schwingungs- und geräuschentkoppelten Befestigung eines Blechbauteils beschreibt. Das Dämpfungslager besteht aus zwei im Wesentlichen aus elastomerem Werkstoff hergestellten Lagerteilen, die das Blechbauteil im Bereich einer Durchgangsöffnung halten und die von einem Befestigungsmittel durchsetzt sind. Um ein derartiges Dämpfungslager im Hinblick auf die lagesichere Befestigung der Bauteile und die Teilevielfalt zu verbessern, weist das Dämpfungslager zwei Lagerteile auf, die baugleich sind. Diese weisen im Bereich zwischen Durchdringungsöffnung und radialer Abstützung entlang des Umfanges mindestens einen Zahn und eine mit der Anzahl der Zähne gleiche Anzahl am Umfang neben diesem Zahn oder diesen Zähnen angeordnete, zu dem Zahn gegenflächig kongruente Zahneingriffsmulden auf.

Schließlich beschreibt DE 10 2017 122 236 A1 ein Befestigungssystem zur Befestigung eines Bauteils an einem Trägerbauteil. Das Befestigungssystem umfasst einen durch eine Durchgangsöffnung des Bauteils steckbaren und in einer Befestigungsbohrung des Trägerbauteils befestigbaren Befestigungsbolzen sowie eine äußere Hülse und eine in einer Durchgangsöffnung der äußeren Hülse axial beweglich gelagerte innere Hülse, wobei die innere Hülse eine Durchgangsöffnung für den Befestigungsbolzen bildet, in der der Befestigungsbolzen axial beweglich gelagert ist. Weiterhin umfasst das Befestigungssystem eine auf die äußere Hülse aufsteckbare erste Federscheibe, die dazu ausgebildet ist, sich im befestigten Zustand an eine erste Seite des Bauteils anzulegen, und eine ebenfalls auf die äußere Hülse aufsteckbare zweite Federscheibe, die dazu ausgebildet ist, sich im befestigten Zustand an eine der ersten Seite gegenüberliegende zweite Seite des Bauteils anzulegen.

Ein Nachteil dieser bekannten Anordnungen ist der Montage- und Herstellungsaufwand sowie die fehlende Dämpfungswirkung sowohl für axiale wie auch radiale Schwingungen.

Eine Fahrzeugkarosserie-Montageanordnung mit einer ersten und einer zweiten Halterung, die eine Kernstruktur mit austauschbaren Elastomer-Körpern darauf definieren, ist in US 2006/244188 beschrieben. Zwischen den Elastomer-Körpern ist eine Montageplatte vorgesehen, um die Baugruppe an einem Fahrzeugrahmen zu befestigen. Ein Halteclip hilft beim Halten der Baugruppe im Rahmen, während Befestigungselemente am Rahmen befestigt sind.

Eine weitere Vorrichtung zum Verbinden zweier Bauteile ist in DE 199 16 098 A1 beschrieben. Die Vorrichtung umfasst ein zweiteiliges, elastisches Entkopplungselement, das eine in dem einen Bauteil vorgehaltene Aufnahmebohrung durchdringt und zwischen ihren Elemententeilen das Bauteil aufnimmt, und ein das Entkopplungselement durchdringendes Verbindungsmittel, das in dem anderen Bauteil festsetzbar ist und das Entkopplungselement an dem anderen Bauteil festspannt.

US 4,530,491 A beschreibt eine Dämpfungsanordnung. Hier bewirken axiale Belastungen und Bewegungen auf einen einheitlichen Elastomer-Körper der Halterung eine Druckablenkung und eine Ausbuchtung eines ersten ringförmigen Körperteils in zwei Richtungen und eine Ablenkungsscherung eines zweiten röhrenförmigen Körperteils. Der zweite Teil des Körpers verleiht der Halterung ebenfalls seitliche Stabilität.

Eine Buchsen-Anordnung zur Verwendung in einem Scharnier für eine Fahrzeugsitzanordnung ist in US 4,883,319 A beschrieben und umfasst ein Paar identischer Verriegelungshülsen, die jeweils ein Paar gegenüberliegender Zapfen aufweisen, die sich von einem ringförmigen Abschnitt in axialer Richtung erstrecken. Jeder der Zapfenabschnitte hat eine Schulter, die radial nach außen gerichtet und auslenkbar ist. Die Schultern an den Zapfenabschnitten greifen in entsprechende vertiefte Leisten an der Innenwand des ringförmigen Abschnitts der gegenüberliegenden Hülse ein, so dass sie zusammenschnappen, um eine integrierte Buchsen-Anordnung zu bilden, durch die ein Scharnierstift geführt wird.

US 2010/0086377 A1 beschreibt eine schwingungsisolierende Befestigungseinsatzstruktur, die so ausgelegt ist, dass sie teilweise oder vollständig fest in einem Loch in einer Platte aufgenommen werden kann. Die Befestigungseinsatzstruktur umfasst eine starre zylindrische Nabe mit einem sich nach außen erstreckenden Flansch und einer durchgehenden Längsöffnung, die zur Aufnahme eines Befestigungselements geeignet ist sowie eine Elastomer-Buchse, die fest um die Nabe herum getragen oder ausgebildet ist und einen Schlitz darin aufweist, der den äußeren Flansch aufnimmt. Weiterhin weist die Struktur ein oberes Gehäuse und ein unteres Gehäuse auf.

Aus CN 111140612 A ist ein Stoßdämpfer bekannt, der eine Verbindungsplatte, einen Verbindungsbolzen, eine erste stoßdämpfende Anordnung und eine zweite stoßdämpfende Anordnung umfasst. Die erste stoßdämpfende Anordnung weist eine erste Hülse und ein erstes stoßdämpfendes Teil auf, das die erste Hülse bedeckt. Die zweite stoßdämpfende Anordnung umfasst eine zweite Hülse und ein zweites stoßdämpfendes Teil, das die zweite Hülse bedeckt. Der Verbindungsbolzen geht nacheinander durch die erste Hülse, die zweite Hülse und die Verbindungsplatte.

Ein Schwingungstilger ist in DE 10 2019 107 885 A1 beschrieben. Der Schwingungstilger weist eine Tilgermasse mit einer Öffnung und wenigstens zwei Federvorrichtungen auf, die in die Öffnung eingesetzt sind. Jede der Federvorrichtungen umfasst wenigstens ein elastomeres Federelement und einen Tragkörper, wobei der Tragkörper das Federelement aufnimmt. Der Tragkörper weist einen Einsetzabschnitt zum Einsetzen des Tragkörpers und des Federelementes in die Öffnung auf, der bezogen auf eine Längsachse des Schwingungstilgers schräg angestellt ist.

EP 2 980 437 A1 beschreibt ein schwingungsdämpfendes Befestigungssystem mit einem Gewindebolzen mit einem Bolzenkopf, einem Gehäuse mit einer Bohrung zur formschlüssigen Befestigung des Gewindebolzens, einem Flansch mit einem zur Bohrung koaxialen Durchlass für den Gewindebolzen, und elastischen Elementen zwischen dem Flansch und dem Gehäuse und/oder zwischen dem Gewindebolzen mit dem Bolzenkopf und dem Flansch. Die elastischen Elemente enthalten Ganzmetallkissen.

JP 2014-095441 A1 schlägt eine Schwingungssteuerbuchse vor, die einen inneren Zylinderteil, der aus Metall geformt ist und in den ein Säulenteil einer Schraube eingesetzt ist, ein äußeres Zylinderteil, das unter Verwendung von Gummi ausgebildet und an einer Außenfläche des inneren Zylinderteils befestigt ist, und ein Unterlegscheibenteil umfasst, das an einer Oberfläche gegenüber dem Kopfteil der Schraube des äußeren Zylinderteils befestigt ist. Ein Rillenteil, in das eine Halterung eingesetzt ist, ist an einer Außenfläche des äußeren Zylinderteils in Umfangsrichtung vorgesehen. Bei der Befestigung einer Schraube wird der äußere Zylinderteil zusammengedrückt, wobei der Kopfteil der Schraube und ein angepasster Körper mit dem Unterlegscheibenteil dazwischen liegen und die Seitenflächen des Rillenteils mit beiden Oberflächen in Kontakt kommt.

Schließlich ist aus EP 1 054 386 A2 ein Verfahren zum Anbringen einer schwimmenden Schwingungsscheibe mit einer Hülse an einer Wärmeisolierplatte mit einem Einsteckloch für die Befestigungsschraube bekannt. Das Verfahren umfasst das Anordnen des metallischen Dämpfungselements auf einer Innenseite und einem Umfangskantenabschnitt des Einstecklochs für die Befestigungsschraube, das Einführen einer männlichen Hülse einer männlichen Unterlegscheibe bzw. einer weiblichen Hülse einer weiblichen Unterlegscheibe in das Bolzeneinführungsloch von beiden Seiten der Wärmeisolierplatte sowie das Anbringen und das Befestigen der männlichen Unterlegscheibe und der weiblichen Unterlegscheibe aneinander mit einem Befestigungsabschnitt, der an der männlichen Hülse und/oder der weiblichen Hülse vorgesehen ist, so dass die Wärmeisolierplatte in einem berührungslosen Zustand sowohl mit der männlichen Unterlegscheibe als auch mit der weiblichen Unterlegscheibe gehalten wird.

Diese Befestigungsanordnung mit Dämpfungswirkung ist der hohe Montage- und Herstellungsaufwand gemeinsam.

Ausgehend von diesen bekannten Befestigungsanordnungen mit Dämpfungswirkung bzw. Dämpfungsanordnungen ist es daher eine Aufgabe der vorliegenden Erfindung, eine verbesserte Dämpfungsanordnung bereitzustellen, die werkzeuglos befestigbar und bei unterschiedlichen Materialstärken einsetzbar sein soll. Ebenso ist es eine Aufgabe der vorliegenden Erfindung, ein vereinfachtes Herstellungsverfahren für eine solche Dämpfungsanordnung bereitzustellen.

### 3. Zusammenfassung der Erfindung

Die obige Aufgabe wird gelöst durch eine Dämpfungsanordnung gemäß dem unabhängigen Patentanspruch 1, ein erstes Bauteil mit der Dämpfungsanordnung gemäß Patentanspruch 8, eine Bauteilverbindung gemäß Patentanspruch 9, ein Herstellungsverfahren einer Dämpfungsanordnung gemäß den unabhängigen Patentansprüchen 12 und 14 sowie ein Verbindungsverfahren gemäß dem unabhängigen Patentanspruch 15. Vorteilhafte Ausführungsformen und Weiterentwicklungen ergeben sich aus der nachfolgenden Beschreibung, den Zeichnungen sowie den anhängigen Patentansprüchen.

Eine erfindungsgemäße Dämpfungsanordnung ist in einer Öffnung eines ersten Bauteils befestigbar. Zudem ist mit der erfindungsgemäßen Dämpfungsanordnung eine gedämpfte Verbindung des ersten Bauteils mit einem zweiten Bauteil realisierbar. Die erfindungsgemäße Dämpfungsanordnung umfasst, ausschließlich, zwei baugleiche Dämpfungselemente aus einem Elastomer oder einem thermoplastischen Elastomer, wobei jedes Dämpfungselement aufweist: einen Kopfbereich mit einem ersten Außendurchmesser, einen Schaftbereich mit einem zweiten Außendurchmesser, der kleiner ist als der erste Außendurchmesser und sich von einer Unterseite des Kopfbereichs erstreckt, sowie eine zentrale erste Durchgangsöffnung, die benachbart zu einer Oberseite des Kopfbereichs einen radial nach innen ragenden Vorsprung aufweist, und nur eine Hülse mit einer zentralen zweiten Durchgangsöffnung, die zumindest teilweise in der zentralen ersten Durchgangsöffnung jedes Dämpfungselements mittels einer reib- und/oder stoffschlüssigen Verbindung angeordnet ist, wobei die nur eine Hülse eine axiale Länge aufweist, die größer ist als die axiale Länge eines Dämpfungselements aber kleiner als die axiale Länge von zwei Dämpfungselementen so dass die zwei baugleichen Dämpfungselemente mit dazwischen angeordnetem ersten Bauteil über die nur eine Hülse aneinander befestigbar sind, wobei die Unterseiten des Kopfbereichs der zwei Dämpfungselemente einander zugewandt sind, die Unterseiten des Kopfbereichs der zwei Dämpfungselemente an dem ersten Bauteil anliegen und die kopfabgewandten Seiten der Schaftbereiche der beiden Dämpfungselemente aneinander anliegen.

Nachfolgend wird der Einsatz der erfindungsgemäßen Dämpfungsanordnung zum besseren Verständnis der Erfindung erläutert. Ein Hauptmerkmal dieser Alternative ist dabei, dass die Dämpfungsanordnung aus zwei baugleichen Dämpfungselementen sowie nur einer Hülse besteht. Die Dämpfungsanordnung umfasst somit drei Bauteile. Eine Verbindung zwischen den beiden Dämpfungselementen wird dadurch erreicht, dass die nur eine Hülse in der zentralen ersten Durchgangsöffnung jedes Dichtungselements mittels einer reib- und/oder stoffschlüssigen Verbindung gehalten ist. Daher sind auch keine Raststrukturen zur Befestigung der Dämpfungselemente in der Öffnung des ersten Bauteils oder zur Befestigung der Dämpfungselemente aneinander vorgesehen. Das Dämpfungselement ist in einer bevorzugten Ausführungsform rund oder oval ausgebildet. Dabei ist die ovale Gestaltung besonders bevorzugt, um eine unterschiedliche Dämpfung in verschiedene Richtungen zu realisieren.

Zur Lageorientierung wird eine Längsachse der Dämpfungsanordnung durch die zentralen ersten Durchgangsöffnungen der baugleichen Dämpfungselemente definiert. Mit anderen Worten verläuft eine Einsetzrichtung eines Verbindungselements, wie beispielsweise einer Verbindungsschraube oder eines Bolzens, durch die zentralen ersten Durchgangsöffnungen der baugleichen Dämpfungselemente sowie die zentrale zweite Durchgangsöffnung der nur einen Hülse entlang der Längsachse der Dämpfungsanordnung.

Bei Verwendung werden zunächst die zwei baugleichen Dämpfungselemente bereitgestellt, die in einer Öffnung eines ersten Bauteils, beispielsweise einer Öffnung in einem Montageflansch einer schwingungserzeugenden Pumpe oder dergleichen, befestigt werden sollen. Alternativ kann das erste Bauteil auch ein Kabelkanal sein, der an einer Fahrzeugkarosserie als beispielhaftem zweitem Bauteil befestigt werden soll. Eine beispielhafte Bauteildicke des ersten Bauteils im Bereich der Öffnung liegt zwischen 1 und 3 mm.

In einem ersten Schritt wird eines der Dämpfungselemente mit der in der zentralen ersten Öffnung zumindest teilweise angeordneten nur einen Hülse bereitgestellt. Hierzu wird die nur eine Hülse insbesondere vom kopfabgewandten Ende des Schaftbereichs her in die zentrale erste Durchgangsöffnung so eingesetzt, dass die nur eine Hülse nur teilweise in der zentralen ersten Durchgangsöffnung angeordnet ist. Aufgrund der reib- und/oder stoffschlüssigen Anordnung der nur einen Hülse in der zentralen ersten Durchgangsöffnung ist diese dort verlier-sicher befestigt. Der verbleibende und somit nicht eingesetzte Teil der nur einen Hülse steht aus dem Schaftbereich des ersten Dämpfungselementes hervor.

Das so vorbereitete erste Dämpfungselement mit der sich über den Schaftbereich hinaus erstreckenden nur einen Hülse wird nun in der Öffnung des ersten Bauteils angeordnet. Die Dimensionierung der Öffnung im ersten Bauteil ist dabei so, dass sich zumindest ein Teil des Schaftbereichs in die Öffnung im ersten Bauteil erstreckt. Ein Außendurchmesser des Kopfbereichs ist wiederum so groß gewählt, dass das Dämpfungselement an dem ersten Bauteil benachbart zur ersten Öffnung anliegt. Die so gebildete Anlagefläche oder Anlagekante definiert eine Anlageebene am ersten Bauteil, die rechtwinklig zur Längsachse der Dämpfungsanordnung ausgerichtet ist. In einer Ausgestaltung ist die Anlagefläche oder Anlagekante kontinuierlich ausgebildet. In einer alternativen Ausgestaltung ist die Anlagefläche oder Anlagekante partiell ausgebildet, beispielsweise mit Durchbrüchen oder Ähnlichem. Da der Schaftbereich an seiner Außenseite vorzugsweise zylindrisch oder oval ausgebildet ist, insbesondere ohne Rastmerkmale oder dergleichen, und vorzugsweise auch nicht im Presssitz in der Bauteilöffnung angeordnet ist, ist das in der Bauteilöffnung angeordnete Dämpfungselemente darin nicht verlier-sicher angeordnet. Vielmehr ist das erste Dämpfungselement mit der nur einen Hülse vorzugsweise lose in der Bauteilöffnung des ersten Bauteils angeordnet.

Um das Einsetzen des jeweiligen Dämpfungselements in die Öffnung im ersten Bauteil zu begrenzen, d.h. um eine definierte Einsetztiefe zu erreichen, kann im Schaftbereich an der Außenseite ein radial nach außen ragender Vorsprungvorgesehen sein. Dieser kann durchgehend oder unterbrochen vorliegen. Alternativ kann diese Funktion auch durch die Bereitstellung von zwei oder mehr radial nach außen ragenden Vorsprüngen realisiert werden, die neben der Anlagefläche oder Anlagekante des Kopfbereichs eine weitere Anlagefläche an der Bauteiloberfläche im Schaftbereich bereitstellen.

Nachdem das erste der zwei baugleichen Dämpfungselemente mit sich in die Öffnung im ersten Bauteil erstreckendem Schaftbereich an der ersten Bauteilseite angeordnet wurde, wird zur Befestigung des ersten Dämpfungselements das andere der zwei Dämpfungselemente auf der gegenüberliegenden zweiten Bauteilseite in analoger Weise angeordnet. Da beide Dämpfungselemente baugleich ausgebildet sind und mit einander zugewandten Seiten bzw. kopfabgewandten Enden des Schaftbereichs in die Bauteilöffnung des ersten Bauteils eingesetzt werden, wird das freie Ende, also der sich über den Schaftbereich des ersten Dämpfungselements erstreckende Teil, der nur einen Hülse nun in der zentralen ersten Durchgangsöffnung des zweiten Dämpfungselements mittels einer reib- und/oder stoffschlüssigen Verbindung befestigt. Auf diese Weise ist die resultierende Dämpfungsanordnung verliersicher in der Öffnung des ersten Bauteils befestigt. In diesem Zustand liegen die kopfabgewandten Seiten der Schaftbereiche der beiden Dämpfungselemente aneinander an. Insbesondere ist das kopfabgewandte Ende im Schaftbereich jedes Dämpfungselements dazu flach ausgebildet. Dieser Aufbau wird später insbesondere mit Bezug auf die bevorzugten Ausführungsformen deutlich.

Nach der so erfolgten Vormontage der Befestigungsanordnung wird ein zweites Bauteil bereitgestellt. Dies erfolgt an derselben Produktionsstelle oder an einer anderen Produktionsstelle, in Abhängigkeit von dem gewünschten Verfahrensablauf. Auch dies wird später im Detail erläutert.

Eine Öffnung des zweiten Bauteils wird mit den zentralen ersten Durchgangsöffnungen der Dämpfungselemente und der zentralen zweiten Durchgangsöffnung der nur einen Hülse ausgerichtet. Anschließend wird ein Verbindungselement, wie beispielsweise eine Verbindungsschraube oder ein Bolzen, durch die zentralen ersten Durchgangsöffnungen geführt und in einem Befestigungsbereich befestigt, der im oder benachbart zum zweiten Bauteil bereitgestellt ist. Die Befestigung erfolgt dabei vorzugsweise so, dass eine Kompression des jeweiligen Dämpfungselements eine Dämpfungswirkung sowohl für axiale wie auch radiale Schwingungen bereitstellt. Aus diesem Grund weist die nur eine Hülse erfindungsgemäß eine axiale Länge auf, die größer ist als die axiale Länge eines Dämpfungselementes aber kleiner als die axiale Länge von zwei Dämpfungselementen. Eine Materialwahl für das Dämpfungselement muss dabei so erfolgen, dass einerseits eine ausreichende Dämpfungswirkung bereitgestellt während andererseits gleichzeitig eine erforderliche Verbindungsstabilität sichergestellt wird. Hierzu eignet sich erfindungsgemäß ein Elastomer oder ein thermoplastisches Elastomer.

Ein Vorteil dieser Vorgehensweise ist, dass der Herstellungsaufwand aufgrund der geringen Anzahl an Bauteilen sowie der Verwendung von baugleichen Dämpfungselementen reduziert ist. Zudem muss ein Werker bei der Montage nicht auf eine richtige Zuordnung der Dämpfungselemente achten. Dies reduziert daher auch die Gefahr einer fehlerhaften Montage. Zudem ist ein automatisierter Einbau vereinfacht, da lediglich die vorzugsweise in einem Dämpfungselement bereits vormontierte nur eine Hülse in ein zweites Dämpfungselement ohne Hülse gesteckt werden muss.

Ein weiterer Vorteil ergibt sich durch die Verwendung der nur einen Hülse, denn auf diese Weise kann eine Materialwahl für das Dämpfungselement stärker auf die Dämpfungswirkung ausgerichtet sein, da die dadurch reduzierte Stabilität der Dämpfungsanordnung durch die stabilisierende Wirkung der nur einen Hülse ausgleichbar ist. Die nur eine Hülse ist vorzugsweise aus Metall oder einem thermoplastischen Material gebildet.

In einer nicht erfindungsgemäßen Alternative umfasst eine Dämpfungsanordnung, die in einer Öffnung eines ersten Bauteils befestigbar ist und durch die eine gedämpfte Verbindung des ersten Bauteils mit einem zweiten Bauteil realisierbar ist, insbesondere ausschließlich, zwei Dämpfungselemente, wobei jedes Dämpfungselement einen Kopfbereich mit einem ersten Außendurchmesser, einen Schaftbereich mit einem zweiten Außendurchmesser, der kleiner ist als der erste Außendurchmesser und sich von einer Unterseite des Kopfbereichs erstreckt, sowie eine zentrale erste Durchgangsöffnung aufweist, und nur eine Hülse mit einer zentralen zweiten Durchgangsöffnung, die zumindest teilweise in der zentralen ersten Durchgangsöffnung jedes Dämpfungselements mittels einer reib- und/oder stoffschlüssigen Verbindung angeordnet ist, so dass die zwei Dämpfungselemente mit einander zugewandten Unterseiten des Kopfbereichs mit dazwischen angeordnetem ersten Bauteil über die nur eine Hülse aneinander befestigbar sind. Im Unterschied zu der erfindungsgemäßen Dämpfungsanordnung müssen die zwei Dämpfungselemente hier nicht baugleich ausgebildet sein. Dies erhöht die Variabilität der Dämpfungsanordnung im Hinblick auf ihre möglichen Einsatzgebiete. Allerdings ist auch im Rahmen dieser Alternative bevorzugt, dass die einander zugewandten zweiten axialen Enden der Dämpfungselemente im eingebauten Zustand aneinander anliegen, aber keine Rastmerkmale aufweisen. Daher wird auch in dieser Alternative eine verlier-sichere Befestigung der Dämpfungselemente in der Bauteilöffnung des ersten Bauteils hauptsächlich, vorzugsweise ausschließlich, mittels der nur einen Hülse realisiert. Bezüglich der Verwendung gelten daher die obigen Ausführungsformen zur ersten Alternative der erfindungsgemäßen Dämpfungsanordnung analog.

Erfindungsgemäß weist die zentrale erste Durchgangsöffnung der Dämpfungsanordnung benachbart zu einer Oberseite des Kopfbereichs einen radial nach innen ragenden Vorsprung auf.

In einer ersten Alternative dient der radial nach innen ragende Vorsprung dazu, eine, insbesondere partielle, axiale Anlagefläche oder Anlagekante für die nur eine Hülse zu bilden. Auf diese Weise ist sichergestellt, dass die nur eine Hülse bis zu einer definierten Stelle in die zentrale erste Durchgangsöffnung eingesetzt wird. Vorzugsweise entspricht in dieser Ausführungsform die axiale Länge der nur einen Hülse dem doppelten der Länge zwischen dem kopfabgewandten Ende des Schaftbereichs und dem Bereich in der zentralen ersten Durchgangsöffnung mit verringertem Innendurchmesser. Bezogen auf eine runde zentrale erste Durchgangsöffnung weist diese somit benachbart zur Oberseite des Kopfbereichs einen Innendurchmesser auf, der kleiner ist als der Außendurchmesser der nur einen Hülse. Diese Verringerung des Innendurchmessers benachbart zur Oberseite des Kopfbereichs erfolgt beispielsweise mittels einer Stufe, einer Fase oder einer Kombination davon. Der entsprechende Vorsprung kann durchgehend oder unterbrochen ausgebildet sein. Alternativ, und bezogen auf eine nicht rund ausgebildete zentrale erste Durchgangsöffnung in Verbindung mit einer nicht runden Hülse, kann die entsprechende Anlagefläche oder Anlagekante durch einen bezogen auf die Längsachse des Dämpfungselements radial nach innen ragenden Vorsprung gebildet sein. Auch hier erfolgt die Bereitstellung der Anlagefläche oder Anlagekante mittels einer Stufe, einer Fase oder einer Kombination davon. Das Vorsehen einer Fase, um eine Anlagefläche oder Anlagekante für die nur eine Hülse bereitzustellen, weist den Vorteil auf, dass bei einer späteren Verwendung das Verhalten des Dämpfungselements bei einer Komprimierung verbessert ist, insbesondere wird ein Abscheren von Material des Dämpfungselements durch die nur eine Hülse vermieden.

In einer zweiten Alternative dient der radial nach innen ragende Vorsprung dazu, insbesondere in Verbindung mit der nur einen Hülse, die einen umlaufenden Bund benachbart zu einem axialen Ende der nur einen Hülse aufweist, als zusätzliches Befestigungsmerkmal. Dies wird später bei der Diskussion der entsprechenden detaillierten Ausführungsform verdeutlicht.

Es ist ebenso bevorzugt, dass jedes Dämpfungselement im Kopfbereich radial außen einen sich parallel zum Schaftbereich erstreckenden Vorsprung umfasst. Dieser Vorsprung dient als Anlagefläche an der Bauteiloberseite benachbart zur Öffnung des ersten Bauteils. Zur Erhöhung der Stabilität im Kopfbereich des Dämpfungselements ist es im Rahmen dieser Ausführungsform besonders bevorzugt, zwischen dem Schaftbereich und dem Vorsprung eine Mehrzahl an Rippen an der Unterseite des Kopfbereichs vorzusehen. Ebenso bevorzugt ist, eine Mehrzahl an ersten und/oder zweiten Durchbrüchen, vorzugsweise runden Durchbrüchen, im Kopfbereich des Dämpfungselements vorzusehen. Hierbei ist die Mehrzahl an ersten Durchbrüchen vorzugsweise im äußeren Bereich des Kopfbereichs kreisförmig angeordnet, während die Mehrzahl an zweiten Durchbrüchen bevorzugt in einem radial inneren Bereich des Kopfbereichs, d.h. benachbart zur zentralen ersten Durchgangsöffnung, angeordnet ist. Die zweiten Durchbrüche erstrecken sich daher bevorzugt auch durch den Schaftbereich bis zum zweiten axialen Ende des Dämpfungselements. Auch die Bereitstellung der Durchbrüche bringt den Vorteil, wie auch die Bereitstellung der Rippen, dass die Stabilität des Dämpfungselements erhöht ist.

In einer weiteren bevorzugten Ausführungsform der Dämpfungsanordnung weist jedes Dämpfungselement in der zentralen ersten Durchgangsöffnung eine Mehrzahl an radial nach innen ragenden Vorsprüngen auf, die die reibschlüssige Verbindung zu der nur einen Hülse realisieren. Auf diese Weise ist die nur eine Hülse mittels Presssitz in der zentralen ersten Durchgangsöffnung des jeweiligen Dämpfungselements angeordnet. Bei der Montage kann dann zunächst die nur eine Hülse in einem ersten der zwei Dämpfungselemente verlier-sicher befestigt werden. Dieses erste oder vorbereitete Dämpfungselement mit der darin verlier-sicher befestigten nur einen Hülse wird mit dem überstehenden Teil der nur einen Hülse und einem Teil des Schaftbereichs in die Öffnung im ersten Bauteil von einer Seite eingesetzt. Bei Aufstecken des verbleibenden zweiten Dämpfungselements von der gegenüberliegenden Bauteilseite in die Öffnung im ersten Bauteil wird dieses ebenfalls verlier-sicher auf der nur einen Hülse befestigt. Somit ist die Verarbeitung der jeweiligen Dämpfungsanordnung erleichtert und ein automatisiertes Verarbeiten wird besonders unterstützt.

Vorteilhafterweise weist jedes Dämpfungselement eine Shore A Härte zwischen 40 und 80 Shore A auf. Diese bevorzugte Ausgestaltung bewirkt, dass das Dämpfungselement auf das jeweilige Einsatzgebiet abgestimmte Dämpfungseigenschaften aufweist.

Gemäß einer weiteren Ausführungsform weist die nur eine Hülse gemäß einer ersten Alternative eine Mehrzahl an Durchbrüchen auf, durch die das Material des Dämpfungselements radial nach innen vorsteht. Diese Ausgestaltung bietet sich insbesondere bei der Herstellung der Dämpfungselemente mittels Spritzguss an, so dass ein erstes Dämpfungselement mit darin verliersicher angeordneter Hülse herstellbar ist. Auf diese Weise kann die nur eine Hülse ebenfalls besonders effektiv bereits bei der Herstellung eines der zwei Dämpfungselemente in dem entsprechenden Dämpfungselement verlier-sicher befestigt werden und der separate Schritt des Einsetzens der nur einen Hülse in eines der Dämpfungselemente entfällt. In dem verbleibenden zweiten Dämpfungselement kann die nur eine Hülse in der oben beschriebenen Weise beispielsweise mittels Presssitz befestigt werden. Bei Verwendung wird die nur eine Hülse daher in gewohnter Weise in das zweite Dämpfungselement eingebracht und dort mittels einer reib- und/oder stoffschlüssigen Verbindung befestigt.

Gemäß einer zweiten Alternative weist die nur eine Hülse einen umlaufenden Bund benachbart zu einem axialen Ende der nur einen Hülse auf. Der Vorteil dieser Ausgestaltung ergibt sich insbesondere bei der späteren Verwendung. So sorgt der Bund der nur einen Hülse dafür, dass keine separate Scheibe zwischen einem Kopf eines Verbindungselements und dem Dämpfungselement erforderlich ist. Dies vereinfacht die Herstellung einer Verbindung zwischen zwei Bauteilen somit weiter.

Ein erfindungsgemäßes erstes Bauteil weist eine in einer Bauteilöffnung des ersten Bauteils angeordnete erfindungsgemäße Dämpfungsanordnung auf. Bei dem ersten Bauteil handelt es sich beispielsweise um eine Pumpe, wie eine Vakuumpumpe, wobei die Dämpfungsanordnung in einer Öffnung eines Montageflanschs vormontiert ist. Alternativ zu der Pumpe kann das erste Bauteil auch ein Kabelkanal oder etwas gleichartiges sein, das mit einer gedämpften Lagerung beispielsweise an einer Fahrzeugkarosserie als zweitem Bauteil befestigt werden soll. Eine Materialstärke des ersten Bauteils benachbart zur Bauteilöffnung beträgt vorzugsweise zwischen 1 und 3 mm. Bezüglich der resultierenden technischen Effekte und Vorteile wird zur Vermeidung von Wiederholungen auf die obigen Ausführungen zur erfindungsgemäßen Dämpfungsanordnung verwiesen.

Eine erfindungsgemäße Bauteilverbindung umfasst ein erfindungsgemäßes erstes Bauteil sowie ein zweites Bauteil mit einer zweiten Öffnung und ein Verbindungselement, wobei das Verbindungselement sich durch die Dämpfungsanordnung erstreckt und mit einem passenden Befestigungsbereich im oder benachbart zum zweiten Bauteil in Eingriff steht. Dieser Aufbau verdeutlicht, dass mit der erfindungsgemäßen Dämpfungsanordnung eine lösbare Befestigung, wie beispielsweise eine Verschraubung, realisierbar ist, wobei in einer besonders bevorzugten Ausführungsform insbesondere die nur eine Hülse der Dämpfungsanordnung im fest verbundenen Zustand der beiden Bauteile an den Bauteilen anliegt, so dass eine Blockverschraubung realisierbar ist. Daraus folgt, dass eine Länge oder axiale Erstreckung der nur einen Hülse in Längsrichtung der Dämpfungsanordnung vorzugsweise geringer ist als eine axiale Erstreckung der Dämpfungselemente in Längsrichtung der Dämpfungsanordnung. Auch im Hinblick auf die erfindungsgemäße Bauteilverbindung wird auf die obigen Erläuterungen zur erfindungsgemäßen Dämpfungsanordnung verwiesen.

In einer bevorzugten Ausführungsform der Bauteilverbindung ist ein radialer Toleranzausgleich während des Herstellens der Bauteilverbindung dadurch realisierbar, dass die nur eine Hülse einen Innendurchmesser aufweist, der größer ist als der Außendurchmesser des Verbindungselements. Dies erleichtert insbesondere die Befestigung der beiden Bauteile aneinander, sei es durch einen Werker oder automatisch.

Schließlich weist bei einer ebenfalls bevorzugten Ausführungsform der Bauteilverbindung das Verbindungselement einen Kopf und einen Schaft auf und eine Scheibe ist zwischen dem Kopf des Verbindungselements und dem benachbart dazu angeordneten Dämpfungselement der Dämpfungsanordnung bereitgestellt, wobei ein Außendurchmesser der Scheibe größer ist als ein Innendurchmesser der Öffnung im ersten Bauteil. Auf dieser Weise wirkt die Befestigungskraft nicht nur auf die Dämpfungsanordnung, sondern auch auf das erste Bauteil. Zudem verhindert die so dimensionierte Scheibe bei einem Versagen der Dämpfungsanordnung ein vollständiges Lösen des ersten Bauteils vom zweiten Bauteil.

Ein erfindungsgemäßes Herstellungsverfahren einer erfindungsgemäßen Dämpfungsanordnung umfasst die Schritte: Bereitstellen von zwei baugleichen Dämpfungselementen, Bereitstellen nur einer Hülse, Anordnen der nur einen Hülse zuerst in einem der zwei baugleichen Dämpfungselemente und danach in dem verbleibenden Dämpfungselement, so dass die zwei baugleichen Dämpfungselemente mit einem dazwischen angeordnetem ersten Bauteil mittels der nur einen Hülse aneinander befestigbar sind. Wie anhand der obigen Schritte erkennbar ist, wird mit dem erfindungsgemäßen Herstellungsverfahren die erfindungsgemäße Dämpfungsanordnung bereitgestellt. Zur Vermeidung von Wiederholungen wird daher auf die obigen Erläuterungen zur erfindungsgemäßen Dämpfungsanordnung verwiesen.

In einer bevorzugten Ausführungsform des Herstellungsverfahrens besteht die Hülse aus einem Metall oder einem Thermoplast. Insbesondere besteht die Hülse aus einem elektrisch leitenden Material, besonders bevorzugt aus einem elektrisch leitenden Thermoplast mit oder ohne Faserverstärkung. Über die Wahl des jeweiligen Materials ist die Dämpfungsanordnung an das gewünschte Einsatzgebiet angepasst.

Ein weiteres erfindungsgemäßes Herstellungsverfahren einer erfindungsgemäßen Dämpfungsanordnung umfasst die Schritte: Bereitstellen nur einer Hülse und Bereitstellen von zwei baugleichen Dämpfungselementen, wobei das Bereitstellen eines der zwei baugleichen Dämpfungselemente erfolgt durch Umspritzen der nur einen Hülse mit einem Material des Dämpfungselements mit einer Shore A Härte zwischen 40 und 80 Shore A, und Anordnen der nur einen Hülse in dem verbleibenden Dämpfungselement, so dass die zwei baugleichen Dämpfungselemente mit einem dazwischen angeordnetem ersten Bauteil mittels der nur einen Hülse aneinander befestigbar sind. Mittels dieses Vorgehens wird die nur eine Hülse beim Spritzgießen des Dämpfungselements davon umspritzt. In diesem Zusammenhang ist es alternativ bevorzugt, dass das Dämpfungselement anstelle des Spritzgießens mittels Vulkanisation oder Extrusion hergestellt wird. In diesem Zusammenhang ist es besonders vorteilhaft, wenn die nur eine Hülse eine Mehrzahl an Durchbrüchen aufweist. Auf diese Weise kann die nur eine Hülse besonders sicher an einem der Dämpfungselemente befestigt werden, wie oben erläutert.

Ein erfindungsgemäßes Verbindungsverfahren eines ersten Bauteils mit einem zweiten Bauteil, umfasst die Schritte: Bereitstellen eines ersten Bauteils mit darin angeordneter Dämpfungsanordnung, insbesondere ein erfindungsgemäßes erstes Bauteil, oder Bereitstellen eines ersten Bauteils und einer erfindungsgemäßen Dämpfungsanordnung sowie Anordnen der erfindungsgemäßen Dämpfungsanordnung in einer Öffnung des ersten Bauteils, danach Anordnen eines zweiten Bauteils mit einer zweiten Bauteilöffnung in Ausrichtung mit der ersten Bauteilöffnung und Einsetzen des Verbindungselements, so dass das Verbindungselement mit einem passenden Befestigungsbereich im oder benachbart zum zweiten Bauteil in Eingriff steht. Mit dem erfindungsgemäßen Verbindungsverfahren ist somit die erfindungsgemäße Bauteilverbindung herstellbar. Bezüglich der sich ergebenden technischen Effekte und Vorteile verweisen wir daher auf die obigen Ausführungen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine perspektivische Ansicht eines ersten Dämpfungselements von oben,
- Figur 2: eine perspektivische Ansicht des Dämpfungselements aus Figur 1 von unten,
- Figur 3: eine Draufsicht auf das Dämpfungselements aus Figur 1,
- Figur 4: eine Seitenansicht des Dämpfungselements aus Figur 1,
- Figur 5: eine Ansicht des Dämpfungselements aus Figur 1 von unten
- Figur 6: eine Schnittansicht einer ersten Ausführungsform des ersten Dämpfungselements,
- Figur 7: eine Schnittansicht einer zweiten Ausführungsform des ersten Dämpfungselements,
- Figur 8: eine perspektivische Ansicht des Dämpfungselements aus Figur 1 sowie einer Hülse,
- Figur 9: eine Schnittansicht des Dämpfungselements aus Figur 1 mit darin eingesetzter Hülse,
- Figur 10: eine erste Ausführungsform der Dämpfungsanordnung gemäß der vorliegenden Erfindung,
- Figur 11: eine Schnittansicht einer Ausführungsform eines ersten Bauteils mit darin angeordneter Dämpfungsanordnung gemäß Figur 10,
- Figur 12: eine Schnittansicht einer Ausführungsform einer Bauteilverbindung gemäß der vorliegenden Erfindung,
- Figur 13: eine perspektivische Ansicht des Dämpfungselements aus Figur 1 sowie einer alternativen Hülse,
- Figur 14: eine perspektivische Ansicht eines zweiten Dämpfungselements,
- Figur 15: eine Draufsicht auf das zweite Dämpfungselement gemäß Figur 14,
- Figur 16: eine perspektivische Ansicht des Dämpfungselements aus Figur 14 sowie einer Hülse,
- Figur 17: eine Schnittansicht des Dämpfungselements aus Figur 14 mit darin eingesetzter Hülse,
- Figur 18: eine zweite Ausführungsform der Dämpfungsanordnung gemäß der vorliegenden Erfindung,
- Figur 19: eine Schnittansicht einer Ausführungsform eines ersten Bauteils mit darin angeordneter Dämpfungsanordnung Figur 18,
- Figur 20: eine perspektivische Ansicht eines dritten Dämpfungselements,
- Figur 21: eine Draufsicht auf das dritte Dämpfungselement gemäß Figur 20,
- Figur 22: eine perspektivische Ansicht des Dämpfungselements aus Figur 20 sowie einer Hülse,
- Figur 23: eine Schnittansicht des Dämpfungselements aus Figur 20 mit darin eingesetzter Hülse,
- Figur 24: eine dritte Ausführungsform der Dämpfungsanordnung gemäß der vorliegenden Erfindung,
- Figur 25: eine Schnittansicht einer Ausführungsform eines ersten Bauteils mit darin angeordneter Dämpfungsanordnung Figur 24,
- Figur 26: eine perspektivische Ansicht eines vierten Dämpfungselements,
- Figur 27: eine Draufsicht auf das vierte Dämpfungselement gemäß Figur 26,
- Figur 28: eine perspektivische Ansicht des Dämpfungselements aus Figur 26 sowie einer Hülse,
- Figur 29: eine Schnittansicht des Dämpfungselements aus Figur 26 mit darin eingesetzter Hülse,
- Figur 30: eine vierte Ausführungsform der Dämpfungsanordnung gemäß der vorliegenden Erfindung,
- Figur 31: eine Schnittansicht einer Ausführungsform eines ersten Bauteils mit darin angeordneter Dämpfungsanordnung Figur 30,
- Figur 32: ein Flussdiagramm einer Ausführungsform eines Herstellungsverfahrens einer Dämpfungsanordnung gemäß der vorliegenden Erfindung und
- Figur 33: ein Flussdiagramm einer Ausführungsform eines Verbindungsverfahrens gemäß der vorliegenden Erfindung.

### 5. Detaillierte Beschreibung der bevorzugten Ausführungsformen

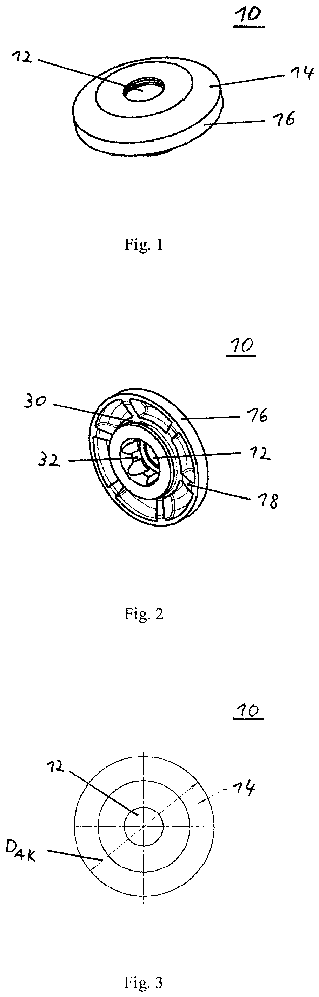

Eine Ausführungsform einer erfindungsgemäßen Dämpfungsanordnung 1 besteht aus zwei baugleichen Dämpfungselementen 10 sowie nur einer Hülse 50. Vorzugsweise sind weitere Bauteile oder Elemente zur Sicherung der Dämpfungsanordnung 1 in einer Öffnung eines ersten Bauteils A nicht erforderlich. Zur besseren Nachvollziehbarkeit wird unter Bezugnahme auf die Figuren 1 bis 7 zunächst eine Ausführungsform eines Dämpfungselements 10 erläutert.

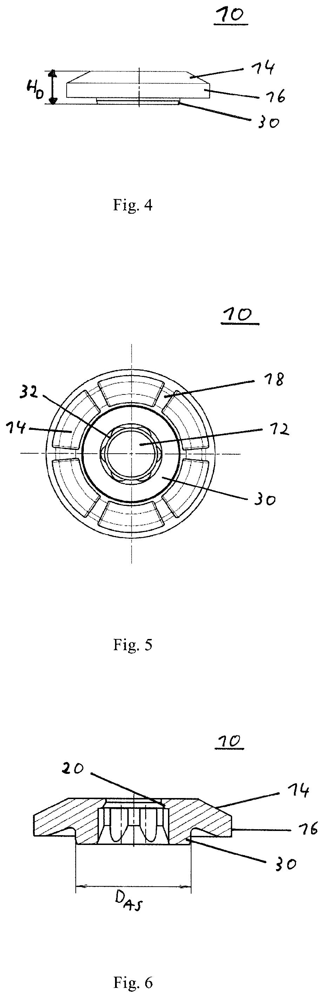

Das Dämpfungselement 10 ist vorzugsweise scheibenförmig ausgebildet und weist eine zentrale erste Durchgangsöffnung 12 mit einem Inndurchmesser D_{I}, einen Kopfbereich 14 sowie einen Schaftbereich 30 auf. In bekannter Weise weist der Kopfbereich 14 eine Oberseite sowie eine Unterseite auf und verfügt über einen Außendurchmesser D_{AK} (siehe Fig. 3). Von der Unterseite des Kopfbereichs 14 erstreckt sich der Schaftbereich 30 mit einem Außendurchmesser D_{AS}, der daher über ein kopfzugewandtes Ende und ein kopfabgewandtes Ende verfügt. Ein erstes axiales Ende des Dämpfungselements 10 wird somit durch die Oberseite des Kopfbereichs und ein zweites axiales Ende des Dämpfungselements 10 durch das kopfabgewandte Ende des Schaftbereichs 30 definiert. Eine axiale Höhe H_{D} des Dämpfungselements wird somit zwischen der Oberseite des Kopfbereichs 14 benachbart zur zentralen ersten Durchgangsöffnung 12 und dem zweiten axialen Ende gemessen, wie in Figur 4 gezeigt. Insbesondere das zweite axiale Ende kann radial außen eine Fase aufweisen. Dies erleichtert das Einsetzen des Dämpfungselements 10 in die Bauteilöffnung des ersten Bauteils.

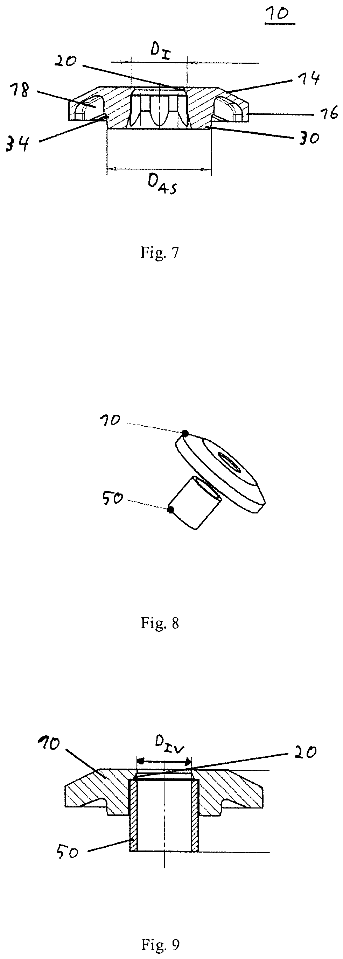

Die Oberseite des Kopfbereichs 14 ist benachbart zur Durchgangsöffnung 12 eben ausgebildet. Im weiteren Verlauf radial nach außen ist der Kopfbereich 14 in Richtung Schaftbereich 30 geneigt ausgebildet. Am Ende dieses geneigten Bereichs ist ein Vorsprung 16 vorhanden, der sich parallel zur Längsachse bzw. zum Schaftbereich 30 des Dämpfungselements 10 von der Oberseite in Richtung des kopfabgewandten Endes des Schaftbereichs 30 erstreckt. Wie später ersichtlich wird, dient gerade eine Unterseite dieses Vorsprungs 16 als Anlagefläche am ersten Bauteil A benachbart zur Öffnung im ersten Bauteil A. Weiterhin sind an der Unterseite des Kopfbereichs 14 Rippen 18 zur Versteifung des Kopfbereichs 14 und damit des Dämpfungselements 10 vorgesehen. In dem vorliegenden Beispiel sind, wie in Figur 2 ersichtlich, sechs Rippen 18 vorgesehen, die gleichmäßig beabstandet angeordnet sind. Zur besseren Nachvollziehbarkeit des Aufbaus zeigen die Figuren 6 und 7 eine Schnittansicht des Dämpfungselements 10, wobei der Schnitt in Figur 6 durch die Rippen 18 erfolgte und in Figur 7 nicht.

Wie oben bereits erwähnt erstreckt sich der Schaftbereich 30 von der Unterseite des Kopfbereichs 14. Der Schaftbereich 30 weist außen eine zylindrische Form auf, die Abstufungen enthalten kann, wie es in Figur 7 gezeigt ist. Die Abstufungen dienen dem erleichterten Einsetzen des Dämpfungselements 10 in die Öffnung im ersten Bauteil A sowie der Vermeidung von Kerbwirkungen beim Kontakt zwischen dem ersten Bauteil A und dem Dämpfungselement 10. Zudem stellt die Abstufung eine Anlagefläche 34 bereit, die bei Verwendung zusätzlich zur Unterseite des Vorsprungs 16 im Kopfbereich an der Bauteiloberfläche anliegt. Auf diese Weise wird somit eine Einsetztiefe des Dämpfungselements 10 in die Bauteilöffnung definiert und begrenzt.

Die zentrale erste Durchgangsöffnung 12 weist in der dargestellten Ausführungsform Vorsprünge 32 auf, die zumindest im Schaftbereich 30 vorhanden sind. Mittels dieser Vorsprünge 32 wird eine Verringerung des Innendurchmessers D_{I} der zentralen ersten Durchgangsöffnung 12 erzielt, wodurch eine später darin eingesetzte Hülse 50 darin reibschlüssig und somit verlier-sicher befestigbar ist. Benachbart zur Oberseite des Kopfbereichs 14 weist das Dämpfungselement 10 einen Bereich 20 mit verringertem Innendurchmesser D_{IV} auf. Der Bereich 20 mit, bei einer rund ausgebildeten zentralen ersten Durchgangsöffnung 12, verringertem Innendurchmesser D_{IV} kann durch eine Stufe, eine Fase oder eine Kombination davon bereitgestellt werden. In Figur 6 wird der Bereich 20 mit verringertem Innendurchmesser durch eine Stufe in Verbindung mit einer Fase bereitgestellt. Die hierdurch gebildete Stufe dient als, insbesondere partielle, axiale Anlagefläche oder Anlagekante für die nur eine Hülse 50, so dass die nur eine Hülse 50 in einer definierten Tiefe in dem Dämpfungselement 10 anordenbar ist. In der Ausführungsform gemäß Figur 7 wird der Bereich 20 mit verringertem Innendurchmesser D_{IV} durch eine Fase bereitgestellt. Dies birgt den weiteren Vorteil, dass bei einer Kompression des Dämpfungselements 10 die Gefahr eines Abscherens dieses Bereichs des Dämpfungselements 10 durch die nur eine Hülse 50 verringert ist. Hierbei ist generell zu beachten, dass neben der vollständig umlaufenden Ausgestaltung des Bereichs 20 der gleiche Effekt durch unterbrochene Vorsprünge oder dergleichen erzielbar ist, solange eine Begrenzung der Einsetztiefe für die nur eine Hülse 50 bereitgestellt wird.

Aufgrund des Außendurchmessers D_{AK} des Kopfbereichs, der größer ist als ein Durchmesser der Öffnung im ersten Bauteil A, ist bei Verwendung des Dämpfungselements 10 sichergestellt, dass das jeweilige Dämpfungselement 10 nicht durch die Öffnung im ersten Bauteil A passt sondern im Randbereich der Öffnung anliegt. Somit ist bei Verwendung die Unterseite des Kopfbereichs 14 benachbart zum ersten Bauteil A angeordnet. Die gegenüberliegende Oberseite des Kopfbereichs 14 ist in der späteren Bauteilverbindung benachbart zu einem Verbindungselement wie einer Verbindungsschraube 3 bzw. einer dazugehörigen Scheibe 5 angeordnet. In diesem Zustand erstreckt sich der Schaftbereich 30, dessen Außendurchmesser D_{AS} vorzugsweise dem Durchmesser der Öffnung im ersten Bauteil A entspricht, zumindest teilweise in die Öffnung im ersten Bauteil A und liegt mit seinem zweiten axialen Ende am zweiten axialen Ende des auf der gegenüberliegenden Bauteilseite angeordneten zweiten Dämpfungselements 10 an.

Zur Bereitstellung der gewünschten Dämpfungsfunktion durch das Dämpfungselement 10 ist dieses vorzugsweise aus einem Elastomer oder einem thermoplastischen Elastomer gebildet, das eine Shore A Härte zwischen 40 und 80 Shore A aufweist. Mittels der entsprechenden Materialwahl kann das Dämpfungselement 10 und somit die Dämpfungsanordnung 1 insgesamt an das gewünschte Einsatzgebiet angepasst werden. Mögliche Einsatzgebiete liegen in einem Temperaturbereich zwischen -40 °C und 200 °C.

Nun Bezugnehmend auf die Figuren 8 und 9 ist ein Dämpfungselement 10 in Verbindung mit der nur einen Hülse 50 gezeigt. Die nur eine Hülse 50 ist bei Verwendung zumindest teilweise in der zentralen ersten Durchgangsöffnung 12 des Dämpfungselements 10 angeordnet. Die Anordnung der Hülse 50 in der zentralen ersten Durchgangsöffnung 12 erfolgt, wie oben erläutert mittels einer reib- und/oder einer stoffschlüssigen Verbindung.

Zudem ist eine axiale Erstreckung oder Höhe der Hülse 50 in Längsrichtung des Dämpfungselements 10 größer als eine axiale Höhe H_{D} des Dämpfungselements 10. Um die Dämpfungseigenschaften beizubehalten, ist die axiale Höhe der nur einen Hülse 50 jedoch geringer als das doppelte der axialen Höhe H_{D} des Dämpfungselements10. Bei Vorhandensein des Bereichs 20 mit verringertem Innendurchmesser ist die axiale Höhe der Hülse 50 vorzugsweise gleich dem doppelten des Abstands zwischen der durch den Bereich 20 mit verringertem Innendurchmesser gebildeten Stufe und dem zweiten axialen Ende des Dämpfungselements 10. Auf diese Weise ist bei einer späteren Blockverschraubung, bei der die nur eine Hülse 50 einerseits an dem zweiten Bauteil B sowie an der Verbindungsschraube 3 bzw. der dazugehörigen Scheibe 5 anliegt, eine Kompression der Dämpfungselemente 10 in Längsrichtung der Dämpfungsanordnung 1 realisierbar.

Als Material für die Hülse 50 wird ein Metall oder ein Thermoplast verwendet. Vorzugsweise handelt es sich bei dem Material um ein elektrisch leitendes Material, beispielsweise ein thermoplastisches Material mit elektrisch leitenden Eigenschaften sowie mit oder ohne Faserverstärkung. Da die nur eine Hülse 50 bei der späteren Verwendung einerseits an dem zweiten Bauteil und andererseits an einem Befestigungselement wie einer Verbindungsschraube oder einer entsprechenden Scheibe 5 anliegt, erfolgt die Materialwahl so, dass die Hülse 50 die entstehenden Kräfte aufnehmen und weiterleiten kann.

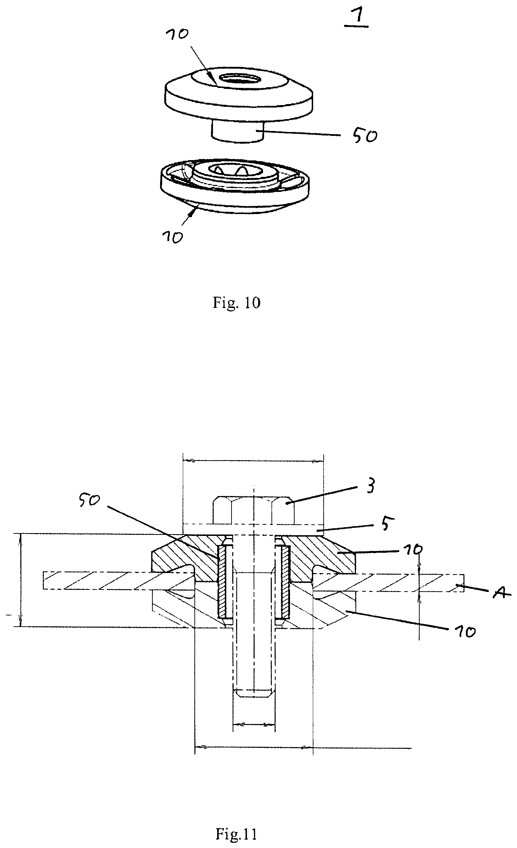

Figur 10 zeigt eine Ausführungsform einer erfindungsgemäßen Dämpfungsanordnung 1 bestehend aus den zwei baugleichen Dämpfungselementen 10 und der nur einen Hülse 50. Eine sichere Montage der Dämpfungsanordnung 1 in der Bauteilöffnung des ersten Bauteils A erfolgt alleine über die nur eine Hülse 50, die zumindest teilweise im Schaftbereich 30 jedes Dämpfungselements 10 angeordnet ist. Dies wird dadurch realisiert, dass in der zentralen ersten Durchgangsöffnung 12 insbesondere im Schaftbereich 30 die radial nach innen ragende Vorsprünge 32 vorgesehen sind. Auf diese Weise ist sichergestellt, dass die Bestandteile Dämpfungselement 10 und Hülse 50 der Dämpfungsanordnung 1 verlier-sicher aneinander befestigt sind. Zudem kann, gerade bei einer Vormontage einer Hülse 50 in einem Dämpfungselement 10 vor dem Anordnen des Dämpfungselements 10 in der Öffnung des ersten Bauteils A, die weitere Verarbeitung erleichtert sein und die Dämpfungsanordnung 1 automatisiert verarbeitet werden.

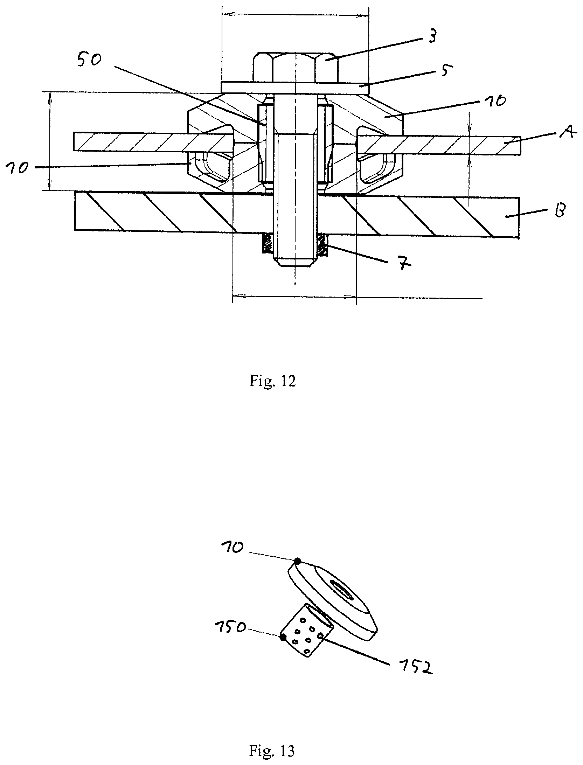

Unter Bezugnahme auf Figuren 11 und 12 wird die Herstellung einer Bauteilverbindung mittels der Dämpfungsanordnung 1 erläutert. Hierzu werden zunächst zwei baugleiche Dämpfungselemente 10 bereitgestellt, die in einer Öffnung eines ersten Bauteils A, beispielsweise einem Montageflansch einer schwingungs-erzeugenden Pumpe oder einem Kabelkanal, befestigt werden sollen. Eine Materialstärke des ersten Bauteils benachbart zur Bauteilöffnung beträgt vorzugsweise zwischen 1 und 3 mm. In einem ersten Schritt wird die nur eine Hülse 50 in einem der Dämpfungselemente 10 angeordnet, sofern nicht eines der Dämpfungselemente 10 bereits die nur eine Hülse 50 aufweist. Danach wird das so vorbereitete Dämpfungselement 10 mit der zumindest teilweise darin angeordneten nur einen Hülse 50 benachbart zur Öffnung des ersten Bauteils A angeordnet. Die Dimensionierung des Außendurchmessers D_{AS} des Schaftbereichs des Dämpfungselements 10 bezogen auf die Öffnung im ersten Bauteil A ist dabei so, dass sich der Schaftbereich 30 des Dämpfungselements 10 in die Öffnung im ersten Bauteil A erstreckt.

Der Außendurchmesser D_{AK} des Dämpfungselements 10 im Kopfbereich ist wiederum so gewählt, dass das Dämpfungselement 10 an dem ersten Bauteil A benachbart zur ersten Öffnung anliegt. Die so gebildete Anlagefläche definiert eine Anlageebene am ersten Bauteil A, die rechtwinklig zur Längsachse der Dämpfungsanordnung 1 ist.

Nachdem eines der zwei baugleichen Dämpfungselemente 10 mit sich in die Öffnung im ersten Bauteil A erstreckendem Schaftbereich 30 an einer ersten Bauteilseite angeordnet wurde, wird das andere der zwei baugleichen Dämpfungselemente 10 auf einer gegenüberliegenden zweiten Bauteilseite in analoger Weise angeordnet. Beide Dämpfungselemente 10 sind baugleich ausgebildet und liegen nach dem Aufstecken des zweiten Dämpfungselements 10 auf die nur eine Hülse 50 mit den einander zugewandten Schaftbereichen 30 aneinander an, d.h. sie liegen mit den einander zugewandten kopfabgewandten axialen Enden aneinander an. Das erste Bauteil A ist zwischen den Dämpfungselementen 10 und erfindungsgemäß zwischen den Kopfbereichen 14 angeordnet.

Ein Vorteil dieser Vorgehensweise ist, dass der Herstellungsaufwand für die Bauteilverbindung aufgrund der Verwendung von zwei baugleichen Dämpfungselementen 10 reduziert ist. Zudem muss ein Werker, gerade wenn die nur eine Hülse 50 nicht in einem Dämpfungselement 10 vormontiert ist, bei der Montage nicht auf eine richtige Zuordnung der Dämpfungselemente 10 achten. Dies reduziert daher auch die Gefahr einer fehlerhaften Montage. Zudem ist die Möglichkeit des automatisierten Einbaus gegeben. Im Ergebnis sind die zwei Dämpfungselemente 10 somit über die nur eine Hülse 50 mit dazwischen angeordnetem erstem Bauteil A aneinander befestigbar. In diesem Zustand liegt somit ein erstes Bauteil A mit einer vormontierten Dämpfungsanordnung 1 in einer Bauteilöffnung des ersten Bauteils A vor.

Nach der so erfolgten Vormontage der Dämpfungsanordnung 1 wird ein zweites Bauteil B bereitgestellt. Dies erfolgt an derselben Produktionsstelle oder an einer anderen Produktionsstelle, in Abhängigkeit von dem gewünschten Verfahrensablauf.

Eine Öffnung des zweiten Bauteils B wird mit der zentralen ersten Durchgangsöffnung 12 der Dämpfungselemente 10 ausgerichtet. Anschließend wird eine Verbindungsschraube 3 als Verbindungselement durch die zentralen ersten Durchgangsöffnungen 12 geführt und mit einem Befestigungsbereich 7 für die Verbindungsschraube 3 in Eingriff gebracht, der beispielsweise ein Innengewinde aufweist und im oder benachbart zum zweiten Bauteil B bereitgestellt ist. Ein radialer Toleranzausgleich ist dabei dadurch realisierbar, dass die nur eine Hülse 50 selbst im Bereich 20 mit verringertem Innendurchmesser einen Innendurchmesser aufweist, der größer ist als der Außendurchmesser der Verbindungsschraube 3. Dies erleichtert insbesondere die Befestigung der beiden Bauteile A, B aneinander, sei es durch einen Werker oder automatisch.

Eine beispielhafte Verschraubung erfolgt so, dass die nur eine Hülse 50 in einem Anfangszustand an einem axialen Hinterschnitt in der zentralen ersten Durchgangsöffnung 12 anliegt. Wird die Verbindungsschraube 3 nun im zweiten Bauteil festgezogen, stellt eine Kompression des jeweiligen Dämpfungselements 10 eine Dämpfungswirkung sowohl für axiale wie auch radiale Schwingungen bereit. Dieser Aufbau verdeutlicht, dass mit der Dämpfungsanordnung 1 eine lösbare Verschraubung realisierbar ist, wobei insbesondere die nur eine Hülse 50 im fest verbundenen Zustand der beiden Bauteile A, B einerseits an dem zweiten Bauteil und andererseits an der Verbindungsschraube 3 bzw. der dazugehörigen Scheibe 5 anliegt, so dass eine Blockverschraubung vorhanden ist. Gerade die Verwendung einer Scheibe 5 mit einem Außendurchmesser, der größer als der Durchmesser der Öffnung im ersten Bauteil A ist hat sich hierbei als vorteilhaft erwiesen. Denn auf diese Weise löst sich das erste Bauteil A nicht vom zweiten Bauteil B selbst bei einem Versagen der Dämpfungsanordnung 1. Zudem werden die durch die Verschraubung auf die Dämpfungsanordnung 1 aufgebrachten Kräfte gleichmäßiger verteilt.

Wie in Figur 13 erkennbar, kann die Hülse 150 in einer alternativen Ausführungsform mit einer Mehrzahl an Durchbrüchen 152 ausgebildet sein, durch die sich das Material des Dämpfungselements 10 radial nach innen erstreckt. Auf diese Weise kann die Hülse 150 verlier-sicher in einem Dämpfungselement 10 bereitgestellt werden. Weiterhin ist das Herstellungsverfahren der Dämpfungsanordnung auf diese Weise weiter vereinfacht, was mit Rücksicht auf das nachfolgende Herstellungsverfahren deutlich wird.

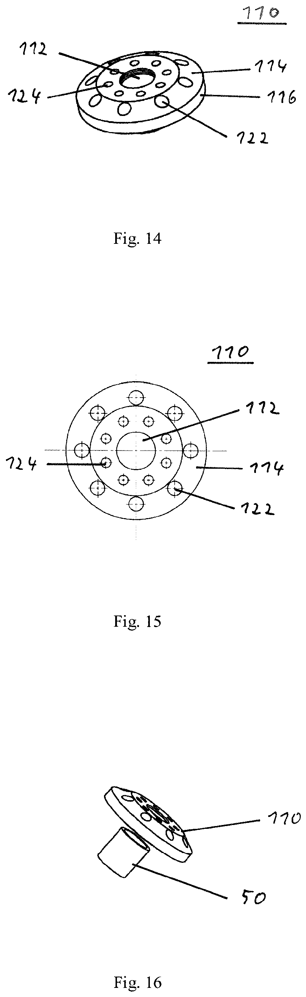

Die Figuren 14 bis 19 verdeutlichen eine zweite Ausführungsform der Dämpfungsanordnung 100. Im Dämpfungselement 110 ist anstelle der Rippen 18 des Dämpfungselements 10 eine Mehrzahl an ersten 122 und zweiten Durchbrüchen 124 im Kopfbereich des Dämpfungselements 110 vorgesehen, die jeweils rund ausgebildet sind. In der weiteren Gestaltung entspricht das Dämpfungselement 110 dem Dämpfungselement 10. So weist das Dämpfungselement 110 die zentrale erste Durchgangsöffnung 112 sowie den Kopfbereich 114 mit dem Vorsprung 116 auf. Benachbart zur Oberseite des Kopfbereichs 114 ist der Bereich 120 mit verringertem Durchmesser ausgebildet.

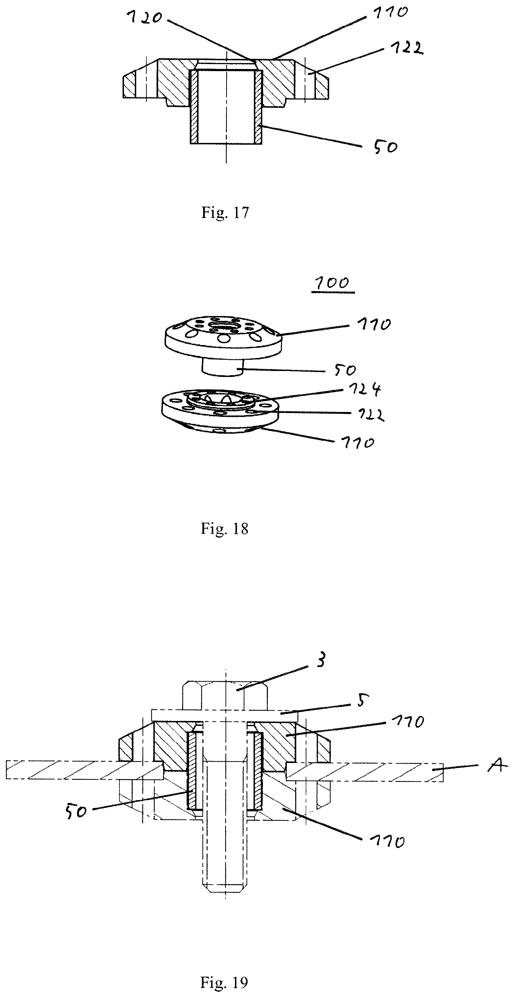

Die Mehrzahl an ersten Durchbrüchen 122 ist im äußeren Bereich des Kopfbereichs 114 kreisförmig angeordnet. In gleicher Weise ist die Mehrzahl an zweiten Durchbrüchen 124 in einem radial inneren Bereich des Kopfbereichs 114, d.h. benachbart zur zentralen ersten Durchgangsöffnung 112, angeordnet. Wie insbesondere aus Figur 18 ersichtlich erstrecken sich die zweiten Durchbrüche 124 auch durch den Schaftbereich 30 bis zum zweiten axialen Ende des Dämpfungselements 110. Die Bereitstellung der Durchbrüche 122 und 124 bringt ebenfalls den Vorteil, dass die Stabilität des Dämpfungselements 110 erhöht ist.

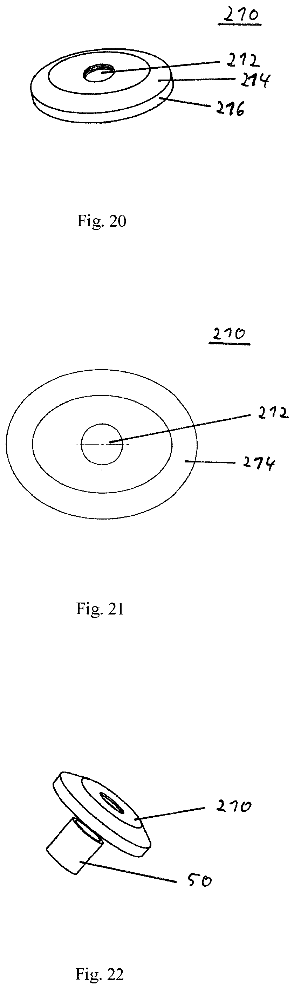

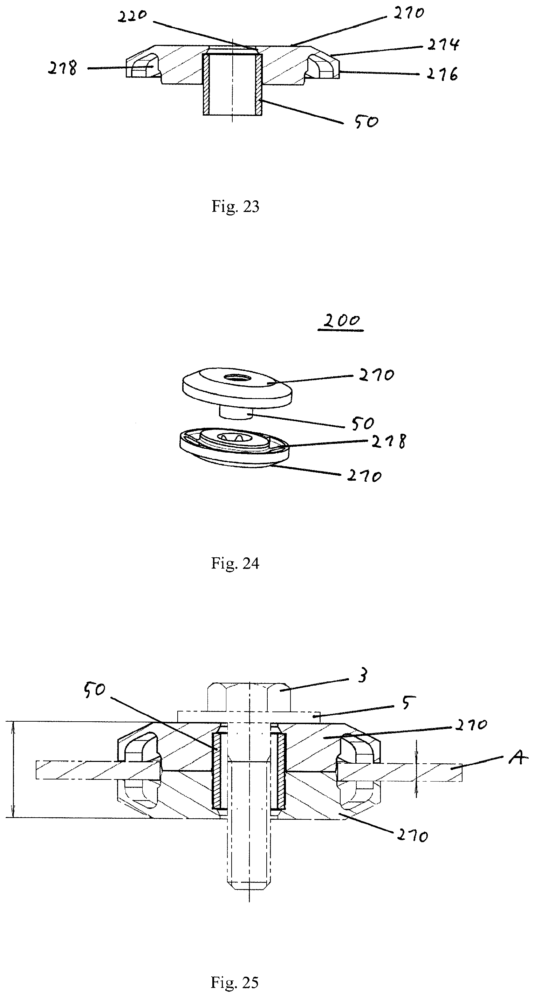

Eine dritte Ausführungsform der Dämpfungsanordnung 200 ist in den Figuren 20 bis 25 gezeigt. Im Gegensatz zu den vorherigen Ausführungsformen ist das Dämpfungselement 210 hier nicht rund, sondern oval ausgebildet. Aufgrund der ovalen Gestaltung lässt sich eine unterschiedliche Dämpfung in verschiedene Richtungen realisieren. Im Übrigen weist das Dämpfungselement 210, wie auch die vorherigen Ausführungsformen die zentrale erste Durchgangsöffnung 212 sowie den Kopfbereich 214 mit dem Vorsprung 216 auf. Ebenso sind Rippen 218 an der Kopfunterseite vorgesehen. Benachbart zur Oberseite des Kopfbereichs 214 ist der Bereich 220 mit verringertem Durchmesser ausgebildet.

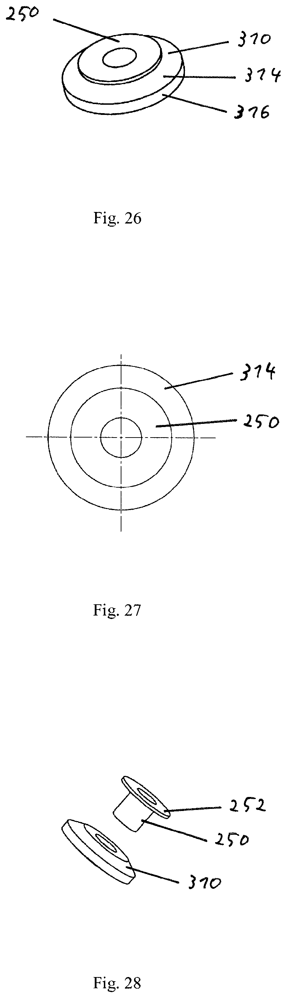

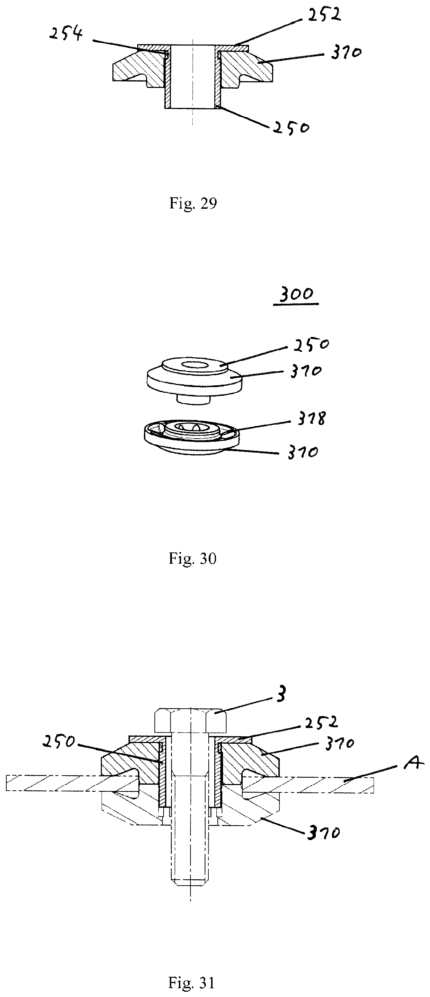

Schließlich zeigen die Figuren 26 bis 31 eine vierte Ausführungsform der Dämpfungsanordnung 300. Das Dämpfungselement 310 umfasst, wie bei der vorherigen Ausführungsformen, die zentrale erste Durchgangsöffnung 312 sowie den Kopfbereich 314 mit dem Vorsprung 316. Ebenso sind Rippen 318 an der Kopfunterseite vorgesehen.

Die Dämpfungsanordnung 310 unterscheidet sich von den vorhergehenden Ausführungsformen insbesondere in der nur einen Hülse 250. Diese weist in dieser Ausführungsform einen umlaufenden Bund 252 auf, so dass bei der späteren Verwendung keine Scheibe zwischen dem Kopf des Verbindungselements 3 und dem Dämpfungselement 310 erforderlich ist. Um eine besonders sichere Befestigung der Hülse 250 in dem Dämpfungselement 310 zu erzielen, weist die Hülse 250 eine Aussparung 254 auf, die mit einem entsprechenden Vorsprung des Dämpfungselements 310 zusammenwirkt. Eine Befestigung des zweiten Dämpfungselements 310 erfolgt in bekannter Weise auf dem aus dem ersten Dämpfungselement 310 vorstehenden Teil der nur einen Hülse 250.

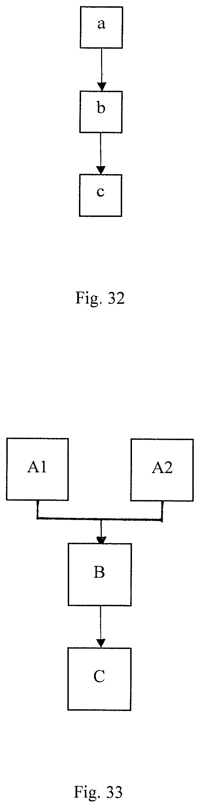

Nun Bezug nehmend auf Figur 32 ist ein schematischer Verfahrensablauf eines Herstellungsverfahrens einer Dämpfungsanordnung 1 dargestellt. Hierbei werden in einem ersten Schritt a zwei baugleiche Dämpfungselemente 10 bereitgestellt. Vorher, gleichzeitig oder danach erfolgt in Schritt b ein Bereitstellen nur einer Hülse 50 sowie in Schritt c ein Anordnen der nur einen Hülse 50 zuerst in einem der Dämpfungselemente 10 und danach in dem verbleibenden Dämpfungselement 10.

Das Bereitstellen der Dämpfungselemente 10 in Schritt a kann durch Spritzgießen der Dämpfungselemente 10 erfolgen. Die Dämpfungselemente 10 können alternativ ebenso mittels Vulkanisation oder Extrusion hergestellt werden. Grundsätzlich sind unterschiedliche Herstellungsweisen möglich. Einerseits können die Dämpfungselemente 10 und die nur eine Hülse 50 getrennt voneinander bereitgestellt werden, so dass in Schritt c ein Einsetzen der nur einen Hülse 50 zuerst in eines der Dämpfungselemente 10 und anschließend in das verbleibende Dämpfungselement 10 erfolgt.

Alternativ wird zunächst die nur eine Hülse 50 in einer Spritzgussform angeordnet und eines der zwei Dämpfungselemente 10 mittels Spritzguss hergestellt, d.h. die nur eine Hülse 50 wird entsprechend umspritzt. Auf diese Weise wird die nur eine Hülse 50 direkt an der richtigen Position im Dämpfungselement 10 angeordnet, so dass das separate Anordnen der nur einen Hülse 50 im Dämpfungselement 10 entfällt. Dies vereinfacht das Herstellungsverfahren weiterhin. Sofern die Hülse 50 aus einem Thermoplast hergestellt werden soll, kann sie ebenfalls mittels Spritzgießen hergestellt werden. Besonders bevorzugt ist in dieser Hinsicht, die nur eine Hülse 50 im gleichen Werkzeug herzustellen, so dass das Dämpfungselement 10 mit der nur einen Hülse 50 darin in einem 2K-Spritzguss herstellbar ist.

Das zweite Dämpfungselement 10 wird ebenfalls mittel Spritzguss hergestellt, wobei sich in der Spritzgussform keine Hülse befindet. Eine Montage erfolgt dann so, dass vorzugsweise das Dämpfungselement 10 mit der darin vormontierten nur einen Hülse 50 in der Bauteilöffnung zumindest teilweise angeordnet wird, bis die Unterseite des Kopfbereichs 14 auf der Bauteiloberseite aufliegt. Dann wird das verbleibende Dämpfungselement 10 von der anderen Seite des ersten Bauteils A in die Bauteilöffnung gesteckt, wodurch das zweite Dämpfungselement 10 mit der nur einen Hülse 50 ebenfalls in Eingriff gelangt und die Unterseite des Kopfbereichs 14 des zweiten Dämpfungselements 10 auf der gegenüberliegenden Bauteiloberseite des ersten Bauteils A anliegt.

In einer bevorzugten Ausführungsform des Herstellungsverfahrens besteht die Hülse 50 aus einem Metall oder einem Thermoplast. Insbesondere besteht die Hülse 50 aus einem elektrisch leitenden Material, besonders bevorzugt aus einem elektrisch leitenden Thermoplast mit oder ohne Faserverstärkung. Über die Wahl des jeweiligen Materials ist die Dämpfungsanordnung 1 an das gewünschte Einsatzgebiet angepasst.

In einer weiteren bevorzugten Ausführungsform des Herstellungsverfahrens erfolgt das Bereitstellen eines der zwei baugleichen Dämpfungselemente 10 durch Umspritzen der nur einen Hülse 50 mit einem Material des Dämpfungselements 10 mit einer Shore A Härte zwischen 40 und 80 Shore A. Mittels dieses Vorgehens wird die nur eine Hülse 50 beim Spritzgießen des Dämpfungselements 10 davon umspritzt. In diesem Zusammenhang ist es alternativ bevorzugt, dass das Dämpfungselement 10 anstelle des Spritzgießens mittels Vulkanisation hergestellt wird. In diesem Zusammenhang ist es besonders vorteilhaft, wenn die nur eine Hülse 150 eine Mehrzahl an Durchbrüchen 152 aufweist. Auf diese Weise kann die nur eine Hülse 150 besonders sicher in einem der Dämpfungselemente 10 angeordnet werden, wie oben erläutert.

Schließlich und Bezug nehmend auf Figur 33 wird eine Ausführungsform eines Verbindungsverfahrens eines ersten Bauteils A mit einem zweiten Bauteil B erläutert. Hierbei wird in einem ersten Schritt A1 ein erstes Bauteil A mit darin angeordneter Dämpfungsanordnung 1 bereitgestellt. In einem alternativen ersten Schritt A2 erfolgt ein Bereitstellen eines ersten Bauteils A und einer Dämpfungsanordnung 1 sowie ein Anordnen der Dämpfungsanordnung 1 in einer Öffnung des ersten Bauteils A. Im anschließenden zweiten Schritt B wird ein zweites Bauteil B mit einer zweiten Bauteilöffnung in Ausrichtung mit der ersten Bauteilöffnung angeordnet. Schließlich wird die Verbindungsschraube 3 in Schritt C eingesetzt, so dass die Verbindungsschraube 3 mit einem Befestigungsbereich 7 im oder benachbart zum zweiten Bauteil B in Eingriff steht.

### 6. Bezugszeichenliste

- 1: Dämpfungsanordnung
- 3: Verbindungsschraube
- 5: Scheibe
- 7: Befestigungsbereich für Verbindungsschraube 3

- 10: Dämpfungselement
- 12: erste Durchgangsöffnung
- 14: Kopfbereich
- 16: Vorsprung
- 18: Rippen
- 20: Bereich mit verringertem Innendurchmesser

- 30: Schaftbereich
- 32: Vorsprung
- 34: Anlagefläche des Schaftbereichs

- 50: Hülse

- 100: Dämpfungsanordnung
- 110: Dämpfungselement
- 112: erste Durchgangsöffnung
- 114: Kopfbereich
- 116: Vorsprung
- 120: Bereich mit verringertem Innendurchmesser
- 122: erster Durchbruch
- 124: zweiter Durchbruch

- 150: Hülse mit Durchbrüchen
- 152: Durchbruch

- 200: Dämpfungsanordnung
- 210: Dämpfungselement
- 212: erste Durchgangsöffnung
- 214: Kopfbereich
- 216: Vorsprung
- 220: Bereich mit verringertem Innendurchmesser

- 250: Hülse
- 252: umlaufender Bund

- 300: Dämpfungsanordnung
- 310: Dämpfungselement
- 312: erste Durchgangsöffnung
- 314: Kopfbereich
- 316: Vorsprung
- 318: Rippen

- A: erstes Bauteil
- B: zweites Bauteil
- D_{AK}: Außendurchmesser Kopfbereich
- D_{AS}: Außendurchmesser Schaftbereich
- D_{I}: Innendurchmesser der zentralen ersten Durchgangsöffnung
- D_{IV}: verringerter Innendurchmesser der zentralen ersten Durchgangsöffnung
- H_{D}: Höhe des Dämpfungselements

## Patentansprüche

1. Eine Dämpfungsanordnung (1; 100; 200; 300), die in einer Öffnung eines ersten Bauteils (A) befestigbar ist und durch die eine gedämpfte Verbindung des ersten Bauteils (A) mit einem zweiten Bauteil (B) realisierbar ist, umfassend, ausschließlich,
a. zwei baugleiche Dämpfungselemente (10; 110; 210; 310) aus einem Elastomer oder einem thermoplastischen Elastomer, wobei jedes Dämpfungselement (10; 110; 210; 310) aufweist:
a1. einen Kopfbereich (14; 114; 214; 314) mit einem ersten Außendurchmesser (D_{AK}),
a2. einen Schaftbereich (30) mit einem zweiten Außendurchmesser (D_{AS}), der kleiner ist als der erste Außendurchmesser (D_{AK}) und sich von einer Unterseite des Kopfbereichs (14; 114; 214; 314) erstreckt, sowie
a3. eine zentrale erste Durchgangsöffnung (12; 112; 212), die benachbart zu einer Oberseite des Kopfbereichs (14; 114; 214; 314) einen radial nach innen ragenden Vorsprung aufweist, und
b. nur eine Hülse (50; 150; 250) mit einer zentralen zweiten Durchgangsöffnung, die zumindest teilweise in der zentralen ersten Durchgangsöffnung (12; 112; 212) jedes Dämpfungselements (10; 110; 210; 310) mittels einer reib- und/oder stoffschlüssigen Verbindung angeordnet ist, wobei die nur eine Hülse (50; 150; 250) eine axiale Länge aufweist, die größer ist als die axiale Länge eines Dämpfungselementes (10; 110; 210; 310) aber kleiner als die axiale Länge von zwei Dämpfungselementen (10; 110; 210; 310) so dass
c. die zwei baugleichen Dämpfungselemente (10; 110; 210; 310) mit dazwischen angeordnetem ersten Bauteil (A) über die nur eine Hülse (50; 150; 250) aneinander befestigbar sind, wobei
c1. die Unterseiten des Kopfbereichs (14; 114; 214; 314) der zwei Dämpfungselemente (10; 110; 210; 310) einander zugewandt sind,
c2. die Unterseiten des Kopfbereichs (14; 114; 214; 314) der zwei Dämpfungselemente (10; 110; 210; 310) an dem ersten Bauteil (A) anliegen und
c3. die kopfabgewandten Seiten der Schaftbereiche (30) der beiden Dämpfungselemente (10; 110; 210; 310) aneinander anliegen.

2. Die Dämpfungsanordnung (1; 100; 200; 300) gemäß einem der vorhergehenden Patentansprüche, bei der jedes Dämpfungselement (10; 110; 21; 310) im Kopfbereich (14; 114; 214; 314) radial außen einen sich parallel zum Schaftbereich (30) erstreckenden Vorsprung (16; 116; 216; 316) umfasst.

3. Die Dämpfungsanordnung (1; 100; 200; 300) gemäß Patentanspruch 2, bei der zwischen dem Schaftbereich (30) und dem Vorsprung (16; 216; 316) eine Mehrzahl an Rippen (18; 218; 318) an der Unterseite des Kopfbereichs (14; 214; 314) vorgesehen ist.

4. Die Dämpfungsanordnung (1; 100; 200; 300) gemäß einem der Patentansprüche 1 bis 2, bei der eine Mehrzahl an ersten (122) und/oder zweiten Durchbrüchen (124) im Kopfbereich (114) des Dämpfungselements (110) vorgesehen ist.

5. Die Dämpfungsanordnung (1; 100; 200; 300) gemäß einem der vorhergehenden Patentansprüche, bei der jedes Dämpfungselemente (10; 110; 210; 310) in der zentralen ersten Durchgangsöffnung (12; 112; 212) eine Mehrzahl an radial nach innen ragenden Vorsprüngen (32) aufweist, die die reibschlüssige Verbindung zu der nur einen Hülse (50; 150; 250) realisieren.

6. Die Dämpfungsanordnung (1; 100; 200; 300) gemäß einem der vorhergehenden Patentansprüche, wobei jedes Dämpfungselement (10; 110; 210; 310) eine Shore A Härte zwischen 40 und 80 Shore A aufweist.

7. Die Dämpfungsanordnung (1; 100; 200; 300) gemäß einem der vorhergehenden Patentansprüche, bei der die nur eine Hülse (150) eine Mehrzahl an Durchbrüchen (152) aufweist oder bei der die nur eine Hülse (250) einen umlaufenden Bund (252) benachbart zu einem axialen Ende der nur einen Hülse (250) aufweist.

8. Ein erstes Bauteil (A) mit einer in einer Bauteilöffnung des ersten Bauteils (A) angeordneten Dämpfungsanordnung (1; 100; 200; 300) gemäß einem der vorhergehenden Patentansprüche 1 bis 7.

9. Eine Bauteilverbindung, umfassend ein erstes Bauteil (A) gemäß Patentanspruch 8 sowie ein zweites Bauteil (B) mit einer zweiten Öffnung und ein Verbindungselement, wobei das Verbindungselement sich durch die Dämpfungsanordnung (1; 100; 200; 300) erstreckt und mit einem passenden Befestigungsbereich (7) im oder benachbart zum zweiten Bauteil (B) in Eingriff steht.

10. Die Bauteilverbindung gemäß Patentanspruch 9, wobei ein radialer Toleranzausgleich dadurch realisierbar ist, dass die nur eine Hülse (50; 150; 250) einen Innendurchmesser aufweist, der größer ist als der Außendurchmesser des Verbindungselements.

11. Die Bauteilverbindung gemäß Patentanspruch 9 oder 10, bei der das Verbindungselement einen Kopf und einen Schaft aufweist und eine Scheibe (5) zwischen dem Kopf des Verbindungselements und dem benachbart dazu angeordneten Dämpfungselement (10; 110; 210) der Dämpfungsanordnung (1; 100; 200) bereitgestellt ist, wobei ein Außendurchmesser der Scheibe (5) größer ist als ein Innendurchmesser der Öffnung im ersten Bauteil (A).

12. Ein Herstellungsverfahren einer Dämpfungsanordnung (1; 100; 200; 300) gemäß einem der vorhergehenden Patentansprüche 1 bis 7 mit den Schritten:
a. Bereitstellen von zwei baugleichen Dämpfungselementen (10; 110; 210; 310) (Schritt a),
b. Bereitstellen nur einer Hülse (50; 150; 250) (Schritt b),
c. Anordnen der nur einen Hülse (50; 150; 250) zuerst in einem der zwei baugleichen Dämpfungselemente (10) und danach in dem verbleibenden Dämpfungselement (10; 110; 210; 310) (Schritt c), so dass die zwei baugleichen Dämpfungselemente (10; 110; 210; 310) mit einem dazwischen angeordnetem ersten Bauteil (A) mittels der nur einen Hülse (50; 150; 250) aneinander befestigbar sind.

13. Das Herstellungsverfahren gemäß Patentanspruch 12, bei dem die nur eine Hülse (50; 150; 250) aus einem Metall oder einem Thermoplast besteht oder bei dem die nur eine Hülse (50; 150; 250) aus einem elektrisch leitenden Material ausgebildet ist, insbesondere aus einem elektrisch leitenden Thermoplast mit oder ohne Faserverstärkung.

14. Ein Herstellungsverfahren einer Dämpfungsanordnung (1; 100; 200; 300) gemäß einem der vorhergehenden Patentansprüche 1 bis 7 mit den Schritten:
a. Bereitstellen nur einer Hülse (50; 150; 250) (Schritt b) und Bereitstellen von zwei baugleichen Dämpfungselementen (10; 110; 210; 310) (Schritt a), wobei
das Bereitstellen eines der zwei baugleichen Dämpfungselemente (10; 110; 210; 310) erfolgt durch Umspritzen der nur einen Hülse (50; 150; 250) mit einem Material des Dämpfungselements (10; 110; 210; 310) mit einer Shore A Härte zwischen 40 und 80 Shore A, und
b. Anordnen der nur einen Hülse (50; 150; 250) in dem verbleibenden Dämpfungselement (10; 110; 210; 310) (Schritt c), so dass die zwei baugleichen Dämpfungselemente (10; 110; 210; 310) mit einem dazwischen angeordnetem ersten Bauteil (A) mittels der nur einen Hülse (50; 150; 250) aneinander befestigbar sind.

15. Ein Verbindungsverfahren eines ersten Bauteils (A) mit einem zweiten Bauteil (B), umfassend die Schritte:
a1. Bereitstellen eines ersten Bauteils (A) mit darin angeordneter Dämpfungsanordnung (1; 100; 200; 300), insbesondere ein erstes Bauteil (A) gemäß Patentanspruch 8, oder
a2. Bereitstellen eines ersten Bauteils (A) und einer Dämpfungsanordnung (1; 100; 200; 300) gemäß einem der Patentansprüche 1 bis 7 sowie Anordnen der Dämpfungsanordnung (1; 100; 200; 300) in einer Öffnung des ersten Bauteils (A), danach
b. Anordnen eines zweiten Bauteils (B) mit einer zweiten Bauteilöffnung in Ausrichtung mit der ersten Bauteilöffnung und
c. Einsetzen des Verbindungselements, so dass das Verbindungselement mit einem passenden Befestigungsbereich (7) im oder benachbart zum zweiten Bauteil (B) in Eingriff steht.

## Claims

1. A damping arrangement (1; 100; 200; 300) which is fastenable in an opening of a first component (A) and by which a dampened connection of the first component (A) with a second component (B) is realizable, including, exclusively,
a. two identically constructed damping elements (10; 110; 210; 310) out of an elastomer or a thermoplastic elastomer, wherein each damping element (10; 110; 210; 310) includes:
a1. a head portion (14; 114; 214; 314) with a first outer diameter (D_{AK}),
a2. a shaft portion (30) with a second outer diameter (D_{AS}) which is smaller than the first outer diameter (D_{AK}) and extends from a bottom side of the head portion (14; 114; 214; 314), as well as
a3. a central first thru-opening (12; 112; 212), which, adjacent to an upper side of the head portion (14; 114; 214; 314), comprises a projection extending radially to the inside, and
b. only one sleeve (50; 150; 250) with a central second thru-opening being arranged at least partly in the central first thru-opening (12; 112; 212) of each damping element (10; 110; 210; 310) by means of a frictional and/or material connection, wherein the only one sleeve (50; 150; 250) has an axial length which is longer than the axial length of one damping element (10; 110; 210; 310) but shorter than the axial length of two damping elements (10; 110; 210; 310) so that
c. the two identically constructed damping elements (10; 110; 210; 310) with first component (A) arranged therebetween are fastenable to one another by means of the only one sleeve (50; 150; 250), wherein
c1. the bottom sides of the head portion (14; 114; 214; 314) of the two damping elements (10; 110; 210; 310) are facing one another,
c2. the bottom sides of the head portion (14; 114; 214; 314) of the two damping elements (10; 110; 210; 310) abut the first component (A) and
c3. the sides, which face away from the head, of the shaft portions (30) of the two damping elements (10; 110; 210; 310) abut each other.

2. The damping arrangement (1; 100; 200; 300) according to one of the preceding claims, in which in the head portion (14; 114; 214; 314), each damping element (10; 110; 210; 310) includes a projection (16; 116; 216; 316) at the radial outside extending parallel to the shaft portion (30).

3. The damping arrangement (1; 100; 200; 300) according to claim 2, in which between the shaft portion (30) and the projection (16; 216; 316), a plurality of ribs (18; 218; 318) is provided at the bottom side of the head portion (14; 214; 314).

4. The damping arrangement (1; 100; 200; 300) according to one of the claims 1 to 2, in which a plurality of first (122) and/or second breakthroughs (124) is provided in the head portion (114) of the damping element (110).

5. The damping arrangement (1; 100; 200; 300) according to one of the preceding claims, in which each damping element (10; 110; 210; 310) includes a plurality of radially inwardly projecting projections (32) in the central first thru-opening (12; 112; 212), which realize the frictional connection to the only one sleeve (50; 150; 250).

6. The damping arrangement (1; 100; 200; 300) according to one of the preceding claims, wherein each damping element (10; 110; 210; 310) has a shore A hardness between 40 and 80 shore A.

7. The damping arrangement (1; 100; 200; 300) according to one of the preceding claims, in which the only one sleeve (150) includes a plurality of breakthroughs (152) or in which the only one sleeve (250) comprises a circumferential collar (252) adjacent to an axial end of the only one sleeve (250).

8. A first component (A) with a damping arrangement (1; 100; 200; 300) according to one of the claims 1 to 7, being arranged in a component opening of the first component (A).

9. A component connection comprising a first component (A) according to claim 8 as well as a second component (B) with a second opening and a connecting element, wherein the connecting element extends through the damping arrangement (1; 100; 200; 300) and engages with a suitable fastening portion (7) in or adjacent to the second component (B).

10. The component connection according to claim 9, wherein a radial tolerance compensation is realizable in that the only one sleeve (50; 150; 250) has an inner diameter which is larger than the outer diameter of the connecting element.

11. The component connection according to claim 9 or 10, in which the connecting element includes a head and a shaft, and a disc (5) is provided between the head of the connecting element and the damping element (10; 110; 210) arranged adjacent to it of the damping arrangement (1; 100; 200), wherein an outer diameter of the disc (5) is larger than an inner diameter of the opening in the first component (A).

12. A manufacturing method of a damping arrangement (1; 100; 200; 300) according to one of the preceding claims 1 to 7 with the steps:
a. providing two identically constructed damping elements (10; 110; 210; 310) (step a),
b. providing only one sleeve (50; 150; 250) (step b),
c. arranging the only one sleeve (50; 150; 250) in one of the two identically constructed damping elements (10) first and after that in the remaining damping element (10; 110; 210; 310) (step c), so that the two identically constructed damping elements (10; 110; 210; 310) with a first component (A) arranged therebetween, are fastenable at each other by means of the only one sleeve (50; 150; 250).

13. The manufacturing method according to claim 12, in which the only one sleeve (50; 150; 250) consists of a metal or a thermoplastic or in which the only one sleeve (50; 150; 250) is made of an electrically conductive material, particularly of an electrically conductive thermoplastic with or without fibre reinforcement.

14. A manufacturing method of a damping arrangement (1; 100; 200; 300) according to one of the preceding claims 1 to 7 with the steps:
a. providing only one sleeve (50; 150; 250) (step b) and providing two identically constructed damping elements (10; 110; 210; 310) (step a), wherein
the providing of one of the two identically constructed damping elements (10; 110; 210; 310) takes place by overmolding the only one sleeve (50; 150; 250) with a material of the damping element (10; 110; 210; 310) with a shore A hardness between 40 and 80 shore A, and
b. arranging of the only one sleeve (50; 150; 250) in the remaining damping element (10; 110; 210; 310) (step c) so that the two identically constructed damping elements (10; 110; 210; 310) with a first component (A) arranged therebetween are fastenable at each other by means of the only one sleeve (50; 150; 250)

15. A connecting method of a first component (A) with a second component (B) including the steps:
a1. providing a first component (A) with damping arrangement (1; 100; 200; 300) arranged in there, in particular a first component (A) according to claim 8, or
a2. providing a first component (A) and a damping arrangement (1; 100; 200; 300) according to one of the claims 1 to 7 as well as arranging the damping arrangement (1; 100; 200; 300) in an opening of the first component (A), after that,
b. arranging a second component (B) with a second component opening in alignment with the first component opening and
c. inserting the connecting element, so that the connecting element engages with a suitable fastening portion (7) in or adjacent to the second component (B).

## Revendications

1. Dispositif d'amortissement (1 ; 100 ; 200 ; 300) apte à être fixé dans une ouverture d'un premier composant (A) et permettant de réaliser une liaison amortie du premier composant (A) avec un deuxième composant (B), comportant, exclusivement,
a. deux éléments d'amortissement (10 ; 110 ; 210 ; 310) identiques en un élastomère ou un élastomère thermoplastique, dans lequel chaque élément d'amortissement (10 ; 110 ; 210 ; 310) présente :
a1. une région de tête (14 ; 114 ; 214 ; 314) avec un premier diamètre extérieur (D_{AK}),
a2. une région de tige (30) avec un deuxième diamètre extérieur (D_{AS}), lequel est plus petit que le premier diamètre extérieur (D_{AK}) et s'étend à partir d'un côté inférieur de la région de tête (14 ; 114 ; 214 ; 314), ainsi que
a3. une première ouverture de passage centrale (12 ; 112 ; 212) présentant une saillie dépassant radialement vers l'intérieur de façon adjacente à un côté supérieur de la région de tête (14 ; 114 ; 214 ; 314), et
b. une seule douille (50 ; 150 ; 250) dotée d'une deuxième ouverture de passage centrale, laquelle est disposée au moins partiellement dans la première ouverture de passage centrale (12 ; 112 ; 212) de chaque élément d'amortissement (10 ; 110 ; 210 ; 310) au moyen d'une liaison par friction et/ou de matière, dans lequel la seule douille (50 ; 150 ; 250) présente une longueur axiale, laquelle est plus grande que la longueur axiale d'un élément d'amortissement (10 ; 110 ; 210 ; 310) mais plus petite que la longueur axiale de deux éléments d'amortissement (10 ; 110 ; 210 ; 310), de sorte que
c. les deux éléments d'amortissement (10 ; 110 ; 210 ; 310) identiques peuvent être fixés l'un à l'autre par le biais de la seule douille (50 ; 150 ; 250), avec le premier composant (A) disposé entre ceux-ci, dans lequel
c1. les côtés inférieurs de la région de tête (14 ; 114 ; 214 ; 314) des deux éléments d'amortissement (10 ; 110 ; 210 ; 310) sont tournés l'un vers l'autre,
c2. les côtés inférieurs de la région de tête (14 ; 114 ; 214 ; 314) des deux éléments d'amortissement (10 ; 110 ; 210 ; 310) s'appliquent sur le premier composant (A) et
c3. les côtés des régions de tige (30) opposés à la tête des deux éléments d'amortissement (10 ; 110 ; 210 ; 310) s'appliquent l'un contre l'autre.

2. Dispositif d'amortissement (1 ; 100 ; 200 ; 300) selon l'une des revendications précédentes, dans lequel, radialement à l'extérieur dans la région de tête (14 ; 114 ; 214 ; 314), chaque élément d'amortissement (10 ; 110 ; 210 ; 310) comporte une saillie (16 ; 116 ; 216 ; 316) s'étendant parallèlement à la région de tige (30).

3. Dispositif d'amortissement (1 ; 100 ; 200 ; 300) selon la revendication 2, dans lequel, entre la région de tige (30) et la saillie (16 ; 216 ; 316), il est prévu une pluralité de nervures (18 ; 218 ; 318) sur le côté inférieur de la région de tête (14 ; 214 ; 314).

4. Dispositif d'amortissement (1 ; 100 ; 200 ; 300) selon l'une des revendications 1 à 2, dans lequel il est prévu une pluralité de premières (122) et/ou de deuxièmes percées (124) dans la région de tête (114) de l'élément d'amortissement (110).

5. Dispositif d'amortissement (1 ; 100 ; 200 ; 300) selon l'une des revendications précédentes, dans lequel, dans la première ouverture de passage centrale (12 ; 112 ; 212), chaque élément d'amortissement (10 ; 110 ; 210 ; 310) présente une pluralité de saillies (32) dépassant radialement vers l'intérieur, lesquelles réalisent une liaison par friction avec la seule douille (50 ; 150 ; 250).

6. Dispositif d'amortissement (1 ; 100 ; 200 ; 300) selon l'une des revendications précédentes, dans lequel chaque élément d'amortissement (10 ; 110 ; 210 ; 310) présente une dureté Shore A entre 40 et 80 Shore A.

7. Dispositif d'amortissement (1 ; 100 ; 200 ; 300) selon l'une des revendications précédentes, dans lequel la seule douille (150) présente une pluralité de percées (152) ou dans lequel la seule douille (250) présente une collerette périphérique (252) adjacente à une extrémité axiale de la seule douille (250).

8. Premier composant (A) doté d'un dispositif d'amortissement (1 ; 100 ; 200 ; 300) selon l'une des revendications précédentes 1 à 7, disposé dans une ouverture de composant du premier composant (A).

9. Liaison de composants, comportant un premier composant (A) selon la revendication 8 ainsi qu'un deuxième composant (B) doté d'une deuxième ouverture et d'un élément de liaison, dans lequel l'élément de liaison s'étend à travers le dispositif d'amortissement (1 ; 100 ; 200 ; 300) et est en prise avec une région de fixation (7) correspondante dans le deuxième composant (B) ou adjacente à celui-ci.

10. Liaison de composants selon la revendication 9, dans laquelle une compensation de tolérance radiale peut être réalisée en ce que la seule douille (50 ; 150 ; 250) présente un diamètre intérieur plus grand que le diamètre extérieur de l'élément de liaison.

11. Liaison de composants selon la revendication 9 ou 10, dans laquelle l'élément de liaison présente une tête et une tige et un disque (5) est fourni entre la tête de l'élément de liaison et l'élément d'amortissement (10 ; 110 ; 210) du dispositif d'amortissement (1 ; 100 ; 200) disposé de façon adjacente à celui-ci, dans laquelle un diamètre extérieur du disque (5) est plus grand qu'un diamètre intérieur de l'ouverture dans le premier composant (A).

12. Procédé de fabrication d'un dispositif d'amortissement (1 ; 100 ; 200 ; 300) selon l'une des revendications précédentes 1 à 7, comprenant les étapes suivantes :
a. mise à disposition de deux éléments d'amortissement (10 ; 110 ; 210 ; 310) identiques (étape a),
b. mise à disposition d'une seule douille (50 ; 150 ; 250) (étape b),
c. disposition de la seule douille (50 ; 150 ; 250) d'abord dans l'un des éléments d'amortissement (10) identiques et ensuite dans l'autre élément d'amortissement (10 ; 110 ; 210 ; 310) (étape c), de telle façon que les deux éléments d'amortissement (10 ; 110 ; 210 ; 310) identiques peuvent être fixés l'un à l'autre au moyen de la seule douille (50 ; 150 ; 250), avec le premier composant (A) disposé entre ceux-ci.

13. Procédé de fabrication selon la revendication 12, dans lequel la seule douille (50 ; 150 ; 250) est constituée d'un métal ou d'une matière thermoplastique ou dans lequel la seule douille (50 ; 150 ; 250) est conçue en un matériau électriquement conducteur, en particulier en une matière thermoplastique électriquement conductrice, avec ou sans renforcement par fibres.

14. Procédé de fabrication d'un dispositif d'amortissement (1 ; 100 ; 200 ; 300) selon l'une des revendications précédentes 1 à 7, comprenant les étapes suivantes :
a. mise à disposition d'une seule douille (50 ; 150 ; 250) (étape b) et mise à disposition de deux éléments d'amortissement (10 ; 110 ; 210 ; 310) identiques (étape a), dans lequel
la mise à disposition de l'un des deux éléments d'amortissement (10 ; 110 ; 210 ; 310) identiques est réalisée par surmoulage de la seule douille (50 ; 150 ; 250) avec un matériau de l'élément d'amortissement (10 ; 110 ; 210 ; 310) présentant une dureté Shore A entre 40 et 80 Shore A, et
b. disposition de la seule douille (50 ; 150 ; 250) dans l'autre élément d'amortissement (10 ; 110 ; 210 ; 310) (étape c), de telle façon que les deux éléments d'amortissement (10 ; 110 ; 210 ; 310) identiques peuvent être fixés l'un à l'autre au moyen de la seule douille (50 ; 150 ; 250), avec le premier composant (A) disposé entre ceux-ci.

15. Procédé de liaison d'un premier composant (A) avec un deuxième composant (B), comportant les étapes suivantes :
a1. mise à disposition d'un premier composant (A) avec un dispositif d'amortissement (1 ; 100 ; 200 ; 300) disposé dans celui-ci, en particulier d'un premier composant (A) selon la revendication 8, ou
a2. mise à disposition d'un premier composant (A) et d'un dispositif d'amortissement (1 ; 100 ; 200 ; 300) selon l'une des revendications 1 à 7 et disposition du dispositif d'amortissement (1 ; 100 ; 200 ; 300) dans une ouverture du premier composant (A), puis
b. disposition d'un deuxième composant (B) doté d'une deuxième ouverture de composant en alignement avec la première ouverture de composant et
c. insertion de l'élément de liaison, de telle façon que l'élément de liaison est en prise avec une région de fixation (7) correspondante dans le deuxième composant (B) ou adjacente à celui-ci.
